# EUROPÄISCHE PATENTSCHRIFT

(11) **EP 1 606 142 B1**
(45) Veröffentlichungstag und Bekanntmachung des Hinweises auf die Patenterteilung: **03.06.2009**
(21) Anmeldenummer: 04712993.7
(22) Anmeldetag: 20.02.2004
(51) Int. Cl.: B60N 2/30, B60N 2/36

(54) **KRAFTFAHRZEUGSITZ, INSBESONDERE RÜCKSITZ FÜR EIN KRAFTFAHRZEUG**
MOTOR VEHICLE SEAT, IN PARTICULAR A REAR SEAT FOR A MOTOR VEHICLE
SIEGE DE VEHICULE AUTOMOBILE, EN PARTICULIER SIEGE ARRIERE POUR UN VEHICULE AUTOMOBILE

(30) Priorität: 17.03.2003 DE 20304713 U
(43) Veröffentlichungstag der Anmeldung: 21.12.2005
(73) Patentinhaber: Brose Fahrzeugteile GmbH & Co. KG, Coburg, 96450 Coburg (DE)
(72) Erfinder: FISCHER, Matthias, 96317 Kronach (DE); HOFMANN, Jochen, 96257 Marktgraitz (DE)
(74) Vertreter: Baumgärtel, Gunnar
(86) Internationale Anmeldenummer: PCT/DE2004/000362
(87) Internationale Veröffentlichungsnummer: WO 2004/082984

(56) Entgegenhaltungen:
- EP-A- 0 985 575
- DE-A- 10 055 205
- DE-A- 10 123 776
- US-A- 5 588 707

## Beschreibung

Die Erfindung betrifft einen Kraftfahrzeugsitz, insbesondere einen Rücksitz für ein Kraftfahrzeug, nach dem Oberbegriff des Anspruchs 1.

Ein derartiger Kraftfahrzeugsitz umfasst ein Sitzuntergestell, das zur Aufnahme eines Sitzpolsters dient und hierdurch eine Sitzfläche für einen Sitzbenutzer definiert; eine Rückenlehne, die einerseits in eine Gebrauchsposition bringbar ist, um den Rücken eines Sitzbenutzers abzustützen, und die andererseits aus der Gebrauchsposition heraus in Richtung auf die Sitzfläche vorgeklappt werden kann; sowie einen Verstellmechanismus des Sitzuntergestells, über den dieses derart mit einer Bodenbaugruppe verbindbar ist, dass sich das Sitzuntergestell bezüglich der Bodenbaugruppe verstellen lässt.

Durch das Vorklappen der Rückenlehne auf die Sitzfläche eines derartigen Kraftfahrzeugsitzes lässt sich zusätzlicher Transportraum schaffen, wenn der entsprechende Sitz nicht für einen Sitzbenutzer benötigt wird. Durch die Einstellbarkeit des Sitzuntergestells lassen sich beispielsweise unterschiedliche Positionen des Sitzes in Sitzlängsrichtung und/oder bezüglich der Sitzhöhe einstellen. Unter der Sitzlängsrichtung wird dabei diejenige Richtung verstanden, die von der Rückseite des Sitzuntergestells, wo sich die Rückenlehne in ihrer Gebrauchsposition erstreckt, zu der gegenüberliegenden Vorderseite des Sitzuntergestells, wo sich die Knie eines in Normalposition sitzenden Sitzbenutzers befänden, verläuft. Die Einstellbarkeit der Sitzhöhe bezeichnet demgegenüber die Einstellbarkeit des Abstandes der Sitzfläche vom Fahrzeugboden entlang der vertikalen Fahrzeugachse, also insbesondere senkrecht zur Sitzlängsrichtung.

Aus der DE 101 23 776 A1 ist ein Fahrzeugsitz mit einem Sitzteil und einem auf diesen aufklappbaren Rückenlehnenteil bekannt, bei dem das Sitzteil beim Überführen von der Gebrauchslage des Sitzes in dessen zusammengeklappte Nichtgebrauchslage mittels beidseitig des Sitzteils angeordneter und in der Sitzkonsole gelagerter Gestänge nach vorne und unten klappbar ist. Das Rückenlehnenteil ist beim Überführen des Sitzes von dessen Gebrauchslage in dessen Nichtgebrauchslage nach hinten verfahrbar ist.

Aus der EP 0 985 575 A2 ist ein Kraftfahrzeug-Rücksitz mit klappbarer Rückenlehne und absenkbarem Sitzteil bekannt, bei dem sich das Sitzteil beim Vorklappen der Rückenlehne absenkt und relativ zur Klappachse der Rückenlehne nach vorn verlagert. Die Rückenlehne ist mit dem Sitzuntergestell durch ein mechanisches Koppelglied verbunden.

Aus der US 5 588 707 A1 ist ein Fahrzeugsitz mit einem absenkbaren Sitzuntergestell und einer nach vorn klappbaren Rückenlehne bekannt, wobei die Rückenlehne über einen Koppelmechanismus mit dem Sitzuntergestell verbunden ist. Beim Vorklappen der Rückenlehne wird das Sitzuntergestell nach vorn und nach unten verschoben.

Aus der DE 100 55 205 A1 ist ein Rücksitzmittelteil für einen Personenkraftwagen mit einem nach vorn klappbaren Rückenlehnenelement und einem mittels einer Schwenkhebelvorrichtung nach vorn und nach unten verlagerbarem Sitzteil bekannt. Das Rückenlehnenelement ist mit dem Sitzteil mittels einer Verbindungshebeleinrichtung derartig verbunden, dass das Sitzteil in der hochgeklappten Rückenlehnenposition des Rückenlehnenelementes die erhöhte Sitzposition und in der nach vorne geklappten Position die abgesenkte Lagerposition einnimmt.

Der Erfindung liegt das Problem zugrunde, einen Kraftfahrzeugsitz der eingangs genannten Art weiter zu verbessern.

Dieses Problem wird erfindungsgemäß durch die Schaffung eines Kraftfahrzeugsitzes mit den Merkmalen des Anspruchs 1 gelöst.

Danach ist die Rückenlehne über einen Koppelmechanismus derart mit dem Sitzuntergestell gekoppelt, dass das Sitzuntergestell durch das Vorklappen der Rückenlehne auf die Sitzfläche (automatisch) in Sitzlängsrichtung verschoben wird und/oder in der Höhe (d.h. hinsichtlich seines vertikalen Abstandes von der Bodenbaugruppe) verstellt, insbesondere in Richtung auf den Fahrzeugboden abgesenkt wird, wobei der Koppelmechanismus ein Steuerelement aufweist, das beim Verschwenken der Rückenlehne gemeinsam mit dieser bewegt wird und hierdurch den Koppelmechanismus derart betätigt, dass dieser auf den Verstellmechanismus des Sitzuntergestells einwirkt, um die beschriebene Verstellbewegung des Sitzuntergestells in Sitzlängsrichtung bzw. in der Höhe auszulösen.

Erfindungsgemäß ist das Steuerelement derart fest mit der Rückenlehne verbunden, dass es beim Vorklappen der Rückenlehne gemeinsam mit dieser verschwenkt wird. Der Koppelmechanismus umfasst ein Koppelglied, das zur Koppelung der Rückenlehne mit dem Sitzuntergestell einerseits mit der Rückenlehne und andererseits mit dem Sitzuntergestell in Wirkverbindung steht. Dieses Koppelglied ist dem Steuerelement des Koppelmechanismus nachgeordnet und wird beim Vorklappen der Rückenlehne durch dieses betätigt. Das Steuerelement weist als einen Bestandteil ein Blockierelement auf, das aufgrund der Stützkräfte, die beim Abstützen des Rückens eines Sitzbenutzers an der Rückenlehne auftreten, derart auf das Koppelglied einwirkt, dass das Sitzuntergestell gegen eine Verschiebung in Sitzlängsrichtung und/oder eine Verstellung der Sitzhöhe gesichert ist.

Hierzu kann ein Anschlag vorgesehen sein, gegen den ein Bestandteil des Sitzuntergestells, z. B. der Sitzpolsterträger oder ein Element des Verstellmechanismus, aufgrund der vorn Koppelmechanismus übertragenen Stützkräfte derart vorgespannt wird, dass eine Verlagerung des Sitzuntergestells in Sitzlängsrichtung oder entlang der vertikalen Fahrzeugachse verhindert wird.

Durch die Erfindung wird mit einfachen Mitteln erreicht, dass beim Vorklappen der Rückenlehne auf die Sitzfläche zur Schaffung zusätzlichen Transportraumes der Fahrzeugsitz automatisch und ohne dass eine zusätzliche, dem Umklappen des Fahrzeugsitzes nachfolgende Einwirkung auf den Fahrzeugsitz erforderlich wäre, in eine Position bewegt wird, die für die Schaffung zusätzlichen Transportraumes besonders vorteilhaft ist. So wird bei einem Absenken des Sitzuntergestells in Richtung auf den Fahrzeugboden zusätzlicher Transportraum oberhalb der vorgeklappten Rückenlehne zur Verfügung gestellt. Eine Vorverlagerung des Sitzes in Sitzlängsrichtung führt demgegenüber zu zusätzlichem Transportraum hinter dem Fahrzeugsitz, was insbesondere bei Rücksitzen von Bedeutung sein kann.

Die Bewegung des Sitzuntergestells in Sitzlängsrichtung und/oder nach unten wird ausgelöst durch die Einwirkung der Rückenlehne auf den Verstellmechanismus des Sitzuntergestells beim Vorklappen der Rückenlehne.

Der Koppelmechanismus, über den die Rückenlehne mit dem Sitzuntergestell verbunden ist, kann hierzu einerseits mit einem Ende an einem Sitzpolsterträger des Sitzuntergestells festgelegt sein, der zur Aufnahme eines Sitzpolsters dient. Ein solcher Sitzpolsterträger kann beispielsweise durch zwei Sitzseitenteile gebildet werden, zwischen denen eine Sitzwanne angeordnet ist, auf der wiederum das Sitzpolster liegt. Andererseits kann der Koppelmechanismus auch unmittelbar mit einem Element des Verstellmechanismus des Sitzuntergestells verbunden sein.

Das andere Ende des Koppelmechanismus steht demgegenüber mit der Rückenlehne in Wirkverbindung, so dass beim Vorklappen der Rückenlehne auf die Sitzfläche des Sitzuntergestells entsprechende Verstellkräfte in das Sitzuntergestell eingeleitet werden können, die zu einer Betätigung des Verstellmechanismus und somit einer Neueinstellung der Sitzposition des Sitzuntergestells führen.

Das Steuerelement kann zu Zwecken eines Toleranzausgleichs vorzugsweise elastisch ausgebildet ist. Alternativ kann das Steuerelement auch über elastische Mittel, z. B. in Form eines Federelementes, an der Rückenlehne positioniert sein, so dass das Steuerelement für Zwecke eines Toleranzausgleichs begrenzt bezüglich der Rückenlehne bewegbar ist.

Für die Einwirkung des Steuerelementes auf den Koppelmechanismus kann das Steuerelement fest mit einem nachgeordneten Element des Koppelmechanismus verbunden sein, z. B., indem das Steuerelement durch eine Bowdeneinhängung für die Seele eines Bowdenzugs gebildet wird, der das nachgeordnete Element des Koppelmechanismus bildet.

Nach einer anderen Ausführungsform werden das Steuerelement und das nachgeordnete Element des Koppelmechanismus durch separate, zueinander bewegbare Baugruppen gebildet, wobei das Steuerelement beim Verschwenken der Rückenlehne derart auf das nachgeordnete Element des Koppelmechanismus einwirkt, dass der Koppelmechanismus zur Einwirkung auf den Verstellmechanismus des Sitzuntergestells betätigt wird.

Unter einem dem Steuerelement nachgeordneten Element des Koppelmechanismus wird dabei jeweils ein solches Element verstanden, das von der Rückenlehne her betrachtet dem Steuerelement nachgeordnet ist, also zwischen dem Steuerelement und dem Sitzuntergestell angeordnet ist.

Das Steuerelement kann mit dem nachgeordneten Element des Koppelmechanismus z.B. über einander zugeordnete Anschläge, über einander zugeordnete Verzahnungsbereiche oder über einen Hebelmechanismus zusammenwirken.

Vorzugsweise betätigt das Steuerelement den Koppelmechanismus beim Vorklappen der Rückenlehne erst dann, nachdem die Rückenlehne um einen vorgegebenen Mindestwinkel aus einer Gebrauchsposition heraus vorgeklappt worden ist. Dieser Leerhub erlaubt ein begrenztes Verschwenken der Rückenlehne um eine gegebene Gebrauchsposition herum, so dass eine neue, andere Gebrauchsposition eingestellt werden kann, ohne dass eine Verlagerung oder Absenkung des Sitzuntergestells ausgelöst würde, die ja nur dann erfolgen soll, wenn die Rückenlehne tatsächlich bis auf die Sitzfläche des Sitzuntergestells vorgeklappt wird, nicht jedoch dann, wenn die Rückenlehne lediglich begrenzt verschwenkt wird, um von einer Gebrauchsposition in eine andere Gebrauchsposition (mit einer anderen Lehnenneigung) überzugehen. Ferner kann nach Überwindung des Leerhubes das Eigengewicht der Rückenlehne deren weiteres Vorklappen sowie deren Einwirkung auf das Sitzuntergestell unterstützen.

Das Kopplungsglied kann dem Steuerelement einerseits unmittelbar nachgeordnet sein, so dass das Steuerelement beim Vorklappen der Rückenlehne unmittelbar auf das Koppelglied einwirkt. Andererseits kann aber auch eine mittelbare Kopplung zwischen dem Steuerelement und dem nachgeordneten Koppelglied vorgesehen sein, z. B. in Form eines Steuemockens, der mit dem Steuerelement über eine Verzahnung und mit dem Koppelglied über eine Kulissenführung zusammenwirkt.

An seinem anderen Ende kann das Koppelglied wahlweise mit dem Sitzpolsterträger des Sitzuntergestells oder mit dem Verstellmechanismus des Sitzuntergestells verbunden sein, wobei diese Verbindung jeweils unmittelbar oder mittelbar über weitere Kopplungselemente, z. B. in Form einer Koppelstange, erfolgen kann.

Das Koppelglied kann beispielsweise durch einen schwenkbar gelagerten Koppelhebel oder einen Bowdenzug gebildet werden.

Der Verstellmechanismus, über den das Sitzuntergestell mit einer Bodenbaugruppe eines Kraftfahrzeugs verbunden ist, kann beispielsweise einen Verstellhebel oder eine Kulissenführung zum Verlagern des vorderen Endes des Sitzuntergestells umfassen. Im Bereich seines hinteren Endes ist das Sitzuntergestell vorzugsweise schwenkbar gelagert, z. B. indem der Sitzpolsterträger schwenkbar am Koppelglied oder an einer karosseriefesten Baugruppe angelenkt ist. Um dabei bei einem Verschwenken des vorderen Verstellhebels bzw. einer Betätigung der vorderen Kulissenführung sowohl eine Absenkung als auch eine Verlagerung des Sitzuntergestells in Sitzlängsrichtung zu gestatten, ist die hintere Anlenkstelle des Sitzuntergestells am Koppelglied oder einer karosseriefesten Baugruppe z.B. in einer Längsführung beweglich geführt.

Weiterhin kann zwischen dem Steuerelement und einem nachgeordneten Element des Koppelmechanismus unter Verwendung von Ver-cahnungselementen oder unter Verwendung eines Hebelmechanismus eine Übersetzung realisiert sein, so dass eine Schwenkbewegung der Rückenlehne beim Vorklappen zu einer definierten, durch das Übersetzungsverhältnis bestimmten Bewegung des dem Steuerelement nachgeordneten Elementes führt.

Weitere Merkmale und Vorteile der Erfindung werden bei der nachfolgenden Beschreibung eines Ausführungsbeispiels anhand der Figuren deutlich werden.

Es zeigen:
- Fig. 1a: eine schematische Seitenansicht eines Kraftfahrzeugsitzes mit einem Sitzuntergestell, dessen Sitzpolsterträger über einen Verstellmechanismus mit einer Bodenbaugruppe eines Kraftfahrzeugs verbunden ist und mit einer Rückenlehne, die in Richtung auf die Sitzfläche des Sitzuntergestells vorklappbar ist und die derart mit dem Sitzuntergestell gekoppelt ist, dass beim Vorklappen der Rückenlehne der Verstellmechanismus des Sitzuntergestells ausgelöst wird;
- Fig. 1b: den Kraftfahrzeugsitz aus Figur 1a nach dem Vorklappen der Rückenlehne;
- Fig. 2a: eine Abwandlung des Kraftfahrzeugsitzes aus Figur 1 a hinsichtlich der Kopplung der Rückenlehne mit dem Sitzuntergestell;
- Fig. 2b: den Kraftfahrzeugsitz aus Figur 2a nach dem Vorklappen der Rückenlehne;
- Fig. 3a: eine Abwandlung des Kraftfahrzeugsitzes aus Figur 1a hinsichtlich der Betätigung des Koppelmechanismus, der die Rückenlehne beim Vorklappen der Rückenlehne mit dem Sitzuntergestell koppelt;
- Fig. 3b: den Kraftfahrzeugsitz aus Figur 3a nach dem Vorklappen der Rückenlehne;
- Fig. 4a: eine Abwandlung des Kraftfahrzeugsitzes aus Figur 1a hinsichtlich der Lagerung des hinteren Endes des Sitzpolsterträgers des Sitzuntergestells;
- Fig. 4b: den Kraftfahrzeugsitz aus Figur 4a nach dem Vorklappen der Rückenlehne;
- Fig. 5a: eine Abwandlung des Kraftfahrzeugsitzes aus Figur 1a hinsichtlich der Ausbildung des Verstellmechanismus im Bereich des vorderen Endes des Sitzpolsterträgers;
- Fig. 5b: den Kraftfahrzeugsitz aus Figur 5a nach dem Vorklappen der Rückenlehne;
- Fig. 6a: eine weitere Abwandlung des Kraftfahrzeugsitzes aus Figur 1a hinsichtlich der Ausbildung des lehnenseitigen Endes des Koppelmechanismus zwischen Rückenlehne und Sitzuntergestell;
- Fig. 6b: den Kraftfahrzeugsitz aus Figur 6a nach dem Vorklappen der Rückenlehne;
- Fig. 7a: eine Abwandlung des Kraftfahrzeugsitzes aus Figur 1a, wobei miteinander zusammenwirkende Verzahnungselemente zur Kopplung der Rückenlehne mit dem Sitzuntergestell vorgesehen sind;
- Fig. 7b: den Kraftfahrzeugsitz aus Figur 7a nach dem Vorklappen der Rückenlehne;
- Fig. 8a: eine Abwandlung des Kraftfahrzeugsitzes aus Figur 1a, wobei ein Bowdenzug zur Kopplung der Rückenlehne mit dem Sitzuntergestell vorgesehen ist;
- Fig. 8b: den Kraftfahrzeugsitz aus Figur 8a nach dem Vorklappen der Rückenlehne;
- Fig. 9a: ein weiteres Ausführungsbeispiel eines Kraftfahrzeugsitzes mit einem Bowdenzug zur Kopplung der Rückenlehne mit dem Sitzuntergestell;
- Fig. 9b: den Kraftfahrzeugsitz aus Figur 9a nach dem Vorklappen der Rückenlehne;
- Fig. 10a: ein Ausführungsbeispiel eines Kraftfahrzeugsitzes, bei dem die Rückenlehne mit dem Sitzuntergestell mittels Hebelelementen gekoppelt ist, die über Verzahnungsbereiche ineinander greifen;
- Fig. 10b: den Kraftfahrzeugsitz aus Figur 10a mit etwas nach vorne geneigter Rückenlehne;
- Fig. 10c: den Kraftfahrzeugsitz aus Figur 10a nach dem Vorklappen der Rückenlehne;
- Fig. 11a: ein Ausführungsbeispiel eines Kraftfahrzeugsitzes mit einem Hebelmechanismus zur Kopplung der Rückenlehne an das Sitzuntergestell;
- Fig. 11b: den Kraftfahrzeugsitz aus Figur 11a nach dem Vorklappen der Rückenlehne.

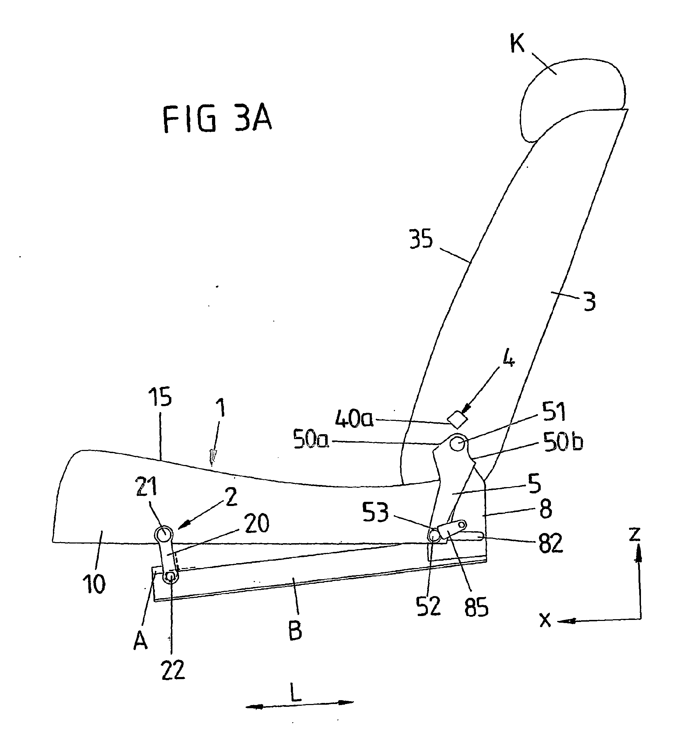

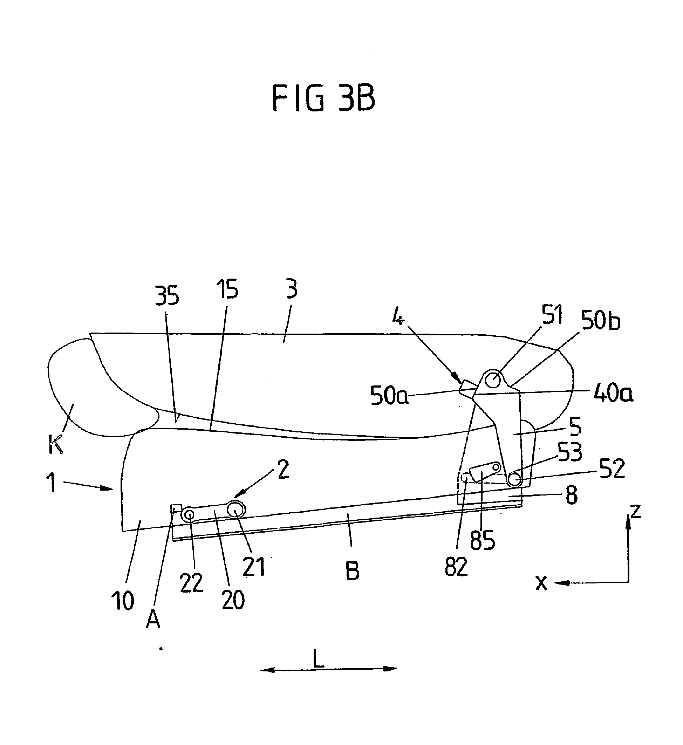

Die Figuren 3, 8, 9, 10 und 11 zeigen keine Ausführungsbeispiele der beanspruchten Erfindung und dienen lediglich der Erläuterung des technischen Hintergrundes.

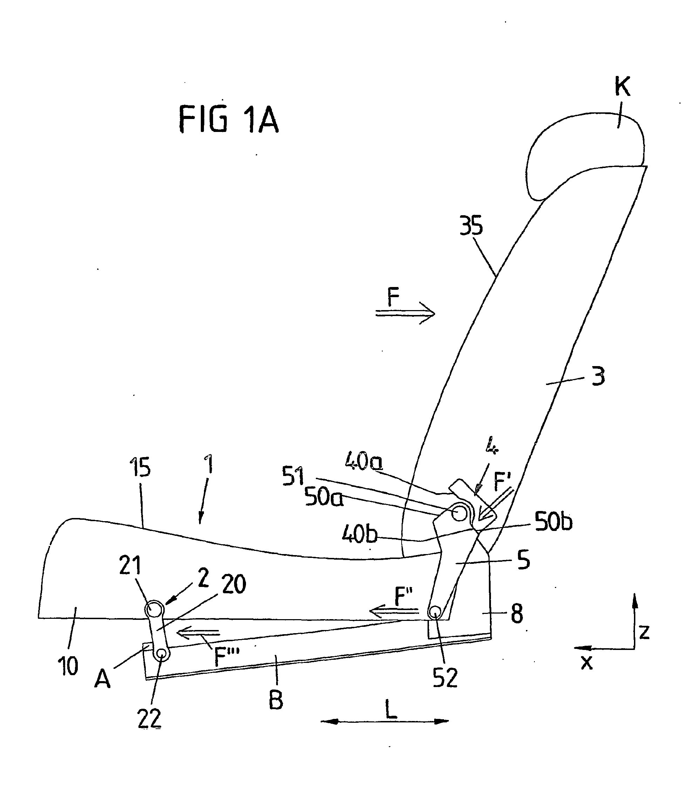

Figur 1a zeigt einen Kraftfahrzeugsitz, bei dem es sich insbesondere um einen Rücksitz eines Kraftfahrzeugs, also einen Sitz der zweiten oder dritten Sitzreihe, handeln kann, und der ein Sitzuntergestell 1 sowie eine Rückenlehne 3 aufweist.

Das Untergestell 1 des Kraftfahrzeugsitzes umfasst einen Sitzpolsterträger 10 zur Aufnahme eines Sitzpolsters, das eine Sitzfläche 15 für einen Fahrzeuginsassen bildet, und ist über einen Verstellmechanismus 2 mit einer Bodenbaugruppe B eines Kraftfahrzeugs gekoppelt. Der Verstellmechanismus 2 weist einen Verstellhebel 20 auf, der im Bereich des vorderen Endes des Sitzpolsterträgers 10 einerseits über eine obere Achse 21 gelenkig mit dem Sitzpolsterträger 10 und andererseits über eine unteres Achse 22 gelenkig mit der Bodenbaugruppe B verbunden ist.

Die Rückenlehne 3 ist schwenkbar an einem an der Bodenbaugruppe B festgelegten Lehnenträger 8 angeordnet und umfasst eine Stützfläche 35 für den Rücken eines Sitzbenutzers sowie eine Kopfstütze K.

Die Rückenlehne 3 ist mit dem Sitzuntergestell 1 über einen Koppelmechanismus 4, 5 gekoppelt. Dieser Koppelmechanismus 4, 5 umfasst zum einen ein Steuerelement 4 mit zwei Anschlägen 40a, 40b und zum anderen ein Koppelglied 5, das einerseits um eine Achse 51 verschwenkbar an der Rückenlehne 3 und andererseits um eine Achse 52 verschwenkbar am Sitzpolsterträger 10 angelenkt ist und das zwei dem Steuerelement 4 zugeordnete Anschläge 50a, 50b aufweist.

Das Steuerelement 4 kann zu Zwecken eines Toleranzausgleichs mit einem elastischen Material belegt sein oder es kann beweglich an der Rückenlehne 3 angeordnet und durch elastische Mittel, z. B. ein vorgespanntes Federelement in Form einer Drehfeder oder einer Blattfeder, an der Rückenlehne 3 positioniert sein.

Die obere Gelenkachse 51 des Koppelgliedes 5 fällt mit der Schwenkachse der Rückenlehne 3 am Lehnenträger 8 (Lehnenbeschlag) zusammen, d.h. das Koppelglied 5 ist mit seinem oberen Gelenk 51 auf der Schwenkachse der Rückenlehne 3 gelagert, und die untere Gelenkachse 52 des Koppelgliedes 5 dient zugleich zur schwenkbaren Lagerung des Sitzpolsterträgers 10 im Bereich seines hinteren Endes.

In der in Figur 1a gezeigten Gebrauchsposition der Rückenlehne 3, in der die Rückenlehne 3 im Wesentlichen senkrecht von der Sitzfläche 15 des Sitzuntergestells 1 nach oben (entlang der vertikalen Fahrzeugachse z) absteht und in der die Rückenlehne 3 mittels eines Verriegelungsmechanismus verriegelt ist, drückt das Steuerelement 4 mit seinem zweiten Anschlag 40b gegen den zugeordneten Anschlag 50b des mit dem Sitzpolsterträger 10 verbundenen Koppelelementes 5, wodurch der Sitzpolsterträger 10 fixiert wird.

Zusätzliche Druckkräfte treten dabei auf durch das Eigengewicht der Rückenlehne 3 und werden unterstützt, wenn auf die Stützfläche 35 der Rückenlehne 3 Stützkräfte F einwirken, die beim Anlehnen des Rückens eines Sitzbenutzers auftreten. Diese Kräfte haben die Tendenz die Rückenlehne 3 um ihre Lehnenachse zu verschwenken, wobei jedoch eine derartige Schwenkbewegung nicht erfolgt, da die Rückenlehne 3 in ihrer jeweiligen Gebrauchsposition verriegelt ist, z. B. mittels einer selbsthemmend ausgestalteten Einrichtung zur Einstellung der Lehnenneigung. Diese Druckkräfte bzw. Stützkräfte F rufen wiederum Kräfte F' hervor, die von dem zweiten Anschlag 40b des Steuerelementes 4 auf den zugeordneten Anschlag 50b des Koppelgliedes 5 wirken und die mittels des Koppelgliedes 5 in eine in Sitzlängsrichtung L nach vorne auf den Sitzpolsterträger 10 einwirkende Kraft F" umgesetzt werden. Hierdurch drückt der vordere Schwenkhebel 20 des Verstellmechanismus 2 mit einer entsprechenden vorwärts gerichteten Kraft F''' gegen einen Anschlag A an der bodenseitigen Baugruppe B. Dadurch sind das Sitzuntergestell 1 und insbesondere dessen Sitzpolsterträger 10 in einer definierten Position klapperfrei verspannt.

Wird die Rückenlehne 3 aus der in Figur 1a gezeigten Gebrauchsposition nach vorne in Richtung auf die Sitzfläche 15 des Sitzuntergestells 1 geklappt, so wird das Steuerelement 4 derart gemeinsam mit der Rückenlehne um deren Lehnenachse verschwenkt, dass dessen erster Anschlag 40a nach einem gewissen Leerweg mit dem zugeordneten Anschlag 50a des Koppelgliedes 5 in Eingriff tritt. Der zur Verfügung stehende Leerweg, bis die beiden ersten Anschläge 40a, 50a des Steuerelementes 4 und des Koppelgliedes 5 bei einem Vorklappen der Rückenlehne 3 miteinander in Eingriff treten, ermöglicht eine Verstellung der Lehnenneigung, ohne dass das Koppelglied 5 durch das Steuerelement 4 betätigt wird. Danach unterstützt das Eigengewicht der Rückenlehne 3 das weitere Vorklappen und deren Einwirkung auf das Sitzuntergestell 1.

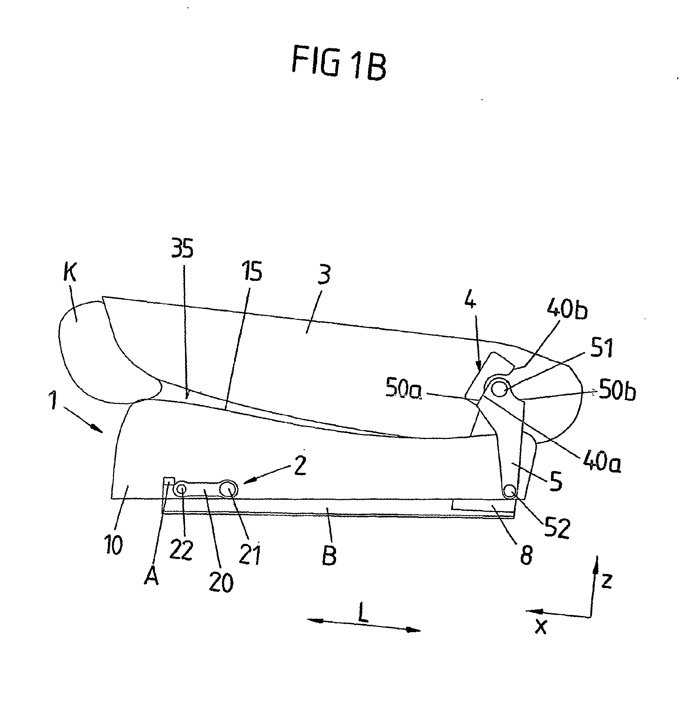

Sobald bei einem weiteren Vorklappen der Rückenlehne 3 über jenen Bereich hinaus der erste Anschlag 40a des Steuerelementes 4 mit dem zugeordneten Anschlag 50a des Koppelgliedes 5 in Eingriff tritt, wird das Koppelglied 5 beim weiteren Vorklappen der Rückenlehne 3 derart verschwenkt, dass es den Sitzpolsterträger 10 in Sitzlängsrichtung L nach hinten (in Richtung hinter die Rückenlehne 3) verschiebt, wobei der Sitzpolsterträger 10 zugleich durch eine entsprechende Schwenkbewegung des Verstellhebels 20 des Verstellmechanismus 2 im Uhrzeigersinn (weg von dem zugeordneten Anschlag A) abgesenkt wird, vergleiche Figur 1b. Demnach bewirkt das Vorklappen der Rückenlehne 3 über das Steuerelement 4 und das nachgeordnete Koppelglied 5 ein Absenken des Sitzpolsterträgers 10 (entlang der vertikalen Fahrzeugachse z) sowie eine Verlagerung des Sitzpolsterträgers 10 nach hinten (entlang der Fahrzeuglängsachse x).

Anhand Figur 1b wird deutlich, dass durch die beim Vorklappen der Rückenlehne 3 erfolgende Verlagerung des Sitzpolsterträgers 10 nach unten und hinten der Fahrzeugsitz besonders kompakt zusammengefaltet werden kann, so dass ein entsprechend großer Transportraum und eine ebene Ladfläche zur Verfügung gestellt werden.

Die Verlagerung des Sitzpolsterträgers 10 in Sitzlängsrichtung L nach hinten erfolgt dabei nicht durch eine Bewegung der bodenseitigen Baugruppe B, bei der es sich ggf. um eine Schienenlängsführung zur Einstellung der Sitzlängsposition handeln kann, sondern ausschließlich durch die mit dem Koppelglied 5 ausgelöste Schwenkbewegung des vorderen Verstellhebels 20 des Verstellmechanismus 2.

Dabei ist das Sitzuntergestell 1 auch nach dem Vorklappen der Rückenlehne 3 auf die Sitzfläche 15 des Sitzuntergestells 1 verriegelt, nämlich durch fortdauernde Einwirkung des ersten Anschlages 40a des Steuerelementes 4 auf den zugeordneten Anschlag 50a des Koppelgliedes 5, da die Rückenlehne 3 auch in ihrer vorgeklappten Position verriegelt ist.

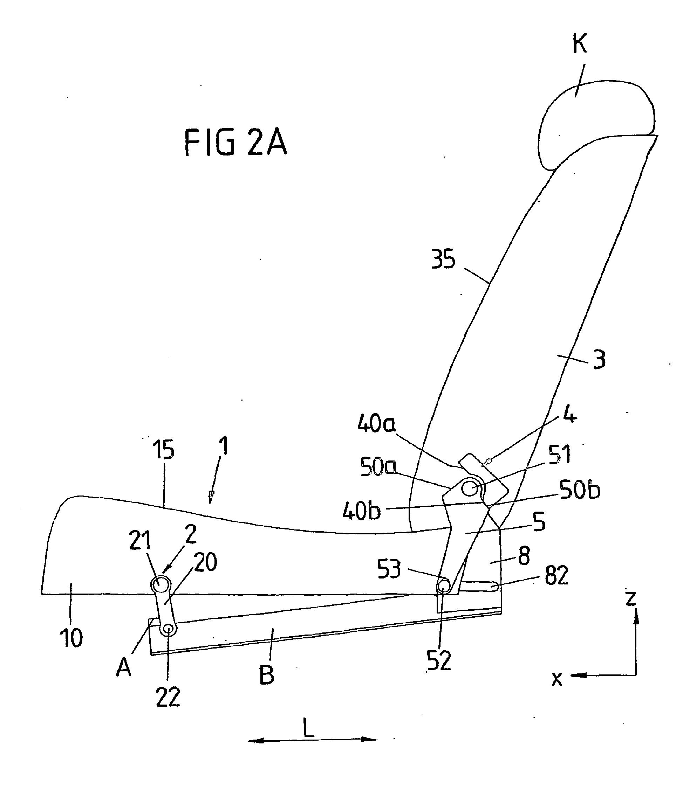

Figur 2a zeigt eine Abwandlung des in Figur 1a dargestellten Kraftfahrzeugsitzes, wobei der Unterschied darin besteht, dass das polsterträgerfeste Gelenkbolzen 52 des Koppelhebels 5 zusätzlich in einer Längsführung (Führungskulisse 82) des Lehnenträgers 8 geführt ist. Dabei ist der entsprechende Gelenkbolzen 52 in einem Langloch 53 des Koppelgliedes 5 geringfügig verschieblich gelagert, um eine geradlinige Bewegung des Gelenkbolzens 52 in der zugeordneten Führungskulisse 82 des Lehnenträgers 8 zu ermöglichen. Durch diese Führung des Gelenkbolzens 52 in einer Führungskulisse 82 des Lehnenträgers 8 können in einem Crash-Fall auf das Sitzuntergestell wirkende Crash-Kräfte unmittelbar über den Lehnenträger 8 in den Fahrzeugboden abgeführt werden.

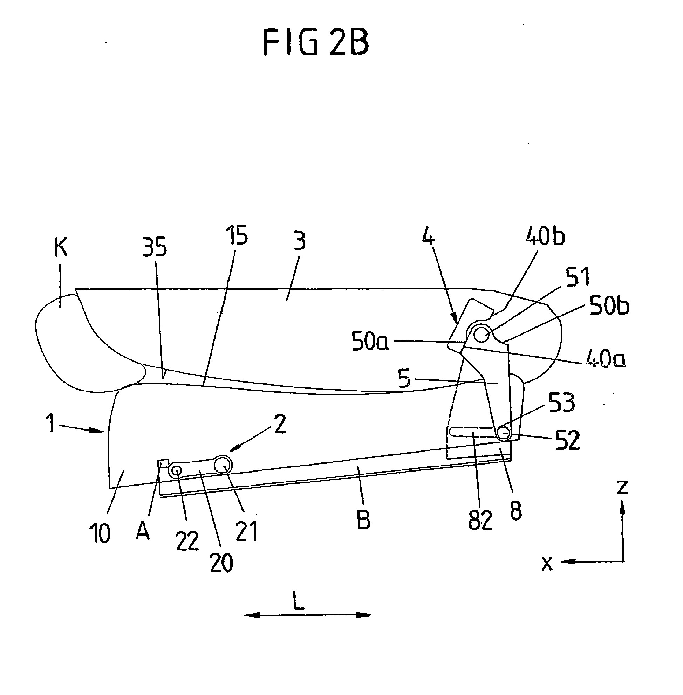

Beim Vorklappen der Rückenlehne 3 und der entsprechenden Verlagerung des Sitzuntergestells 1 nach hinten und unten wird der Gelenkbolzen 52 in der Führungskulisse 82 verschoben, vergleiche Figur 2b.

Figur 3a zeigt eine Abwandlung des Kraftfahrzeugsitzes aus Figur 1a, wobei der Unterschied darin besteht, dass das Steuerelement 4 lediglich einen ersten Anschlag 40a zur Betätigung des Koppelgliedes 5 beim Vorklappen der Rückenlehne 3, nicht aber einen zweiten Anschlag zur Verriegelung des Sitzuntergestells 1 bei in Gebrauchsposition befindlicher Rückenlehne 3 aufweist. Stattdessen ist der Längsführung 82 des Lehnenträgers 8 ein schwenkbar gelagertes Verriegelungselement 85 zugeordnet, das bei in Gebrauchsposition befindlicher Rückenlehne 3 derart auf den in der Führungskulisse 82 angeordneten Gelenkbolzen 52 einwirkt, dass dieser nicht in der Führungskulisse 82 verschoben werden kann und das gleichzeitig mit der Lehnenentriegelung geöffnet wird. Hierdurch ist eine Bewegung des Sitzpolsterträgers 10 nach hinten nicht möglich. Der Sitzpolsterträger 10 (und damit das Sitzuntergestell 1 insgesamt) ist somit zwischen dem Verriegelungselement 85 und dem vorderen Anschlag A arretiert. Dadurch können in einem begrenzten Schwenkbereich der Rückenlehne 3 unterschiedliche Gebrauchspositionen mit unterschiedlicher Lehnenneigung eingestellt und verriegelt werden, ohne dass hiervon die Arretierung des Sitzuntergestells 1 betroffen wäre.

Der Verstellhebel 20 kann dabei mittels eines elastischen Elementes, z.B. in Form einer in Figur 3a gestrichelt angedeuteten Drehfeder, in Richtung auf seine aufrechte Lage vorgespannt sein, d.h. in Richtung auf diejenige Lage, die einem nicht abgesenkten, in Gebrauchsposition befindlichen Sitzträger gemäß Figur 3a entspricht. Der Verstellhebel 20 ist dann gegen den vorderen Anschlag A vorgespannt. Mittels eines solchen elastischen Elementes wird bei einem erneuten Hochklappen der Rückenlehne aus der in Figur 3b gezeigten vorgeklappten Lage heraus das Wiederanheben des Sitzpolsterträgers 10 unterstützt.

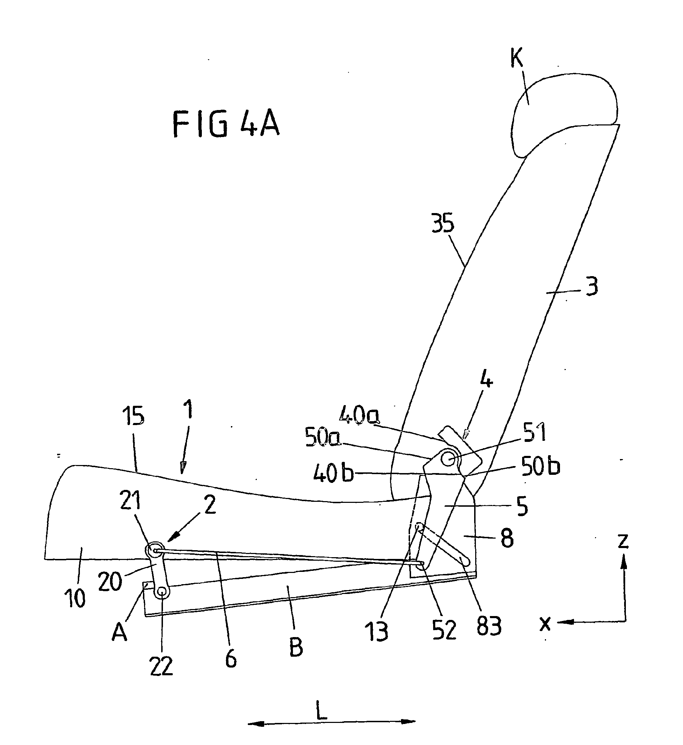

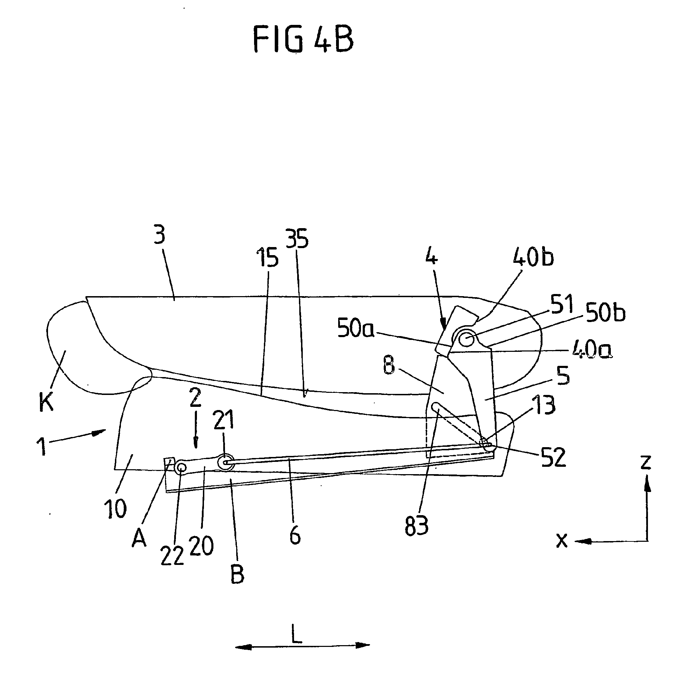

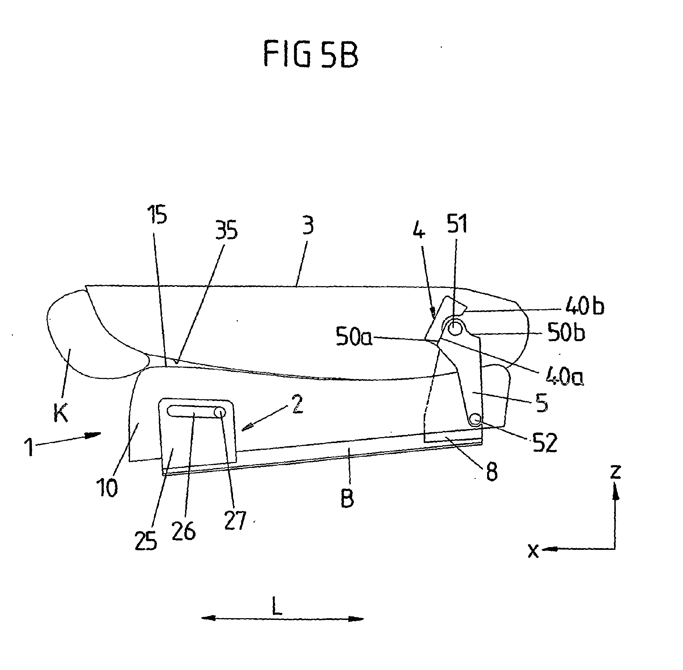

Das in Figur 4a gezeigte Ausführungsbeispiel unterscheidet sich von dem in Figur 3a dargestellten Kraftfahrzeugsitz dadurch, dass das Koppelglied 5 an seiner unteren Anlenkstelle 52 gelenkig mit einer Koppelstange 6 verbunden ist, die wiederum mit der oberen, Sitzpolsterträgerseitigen Anlenkstelle 21 des vorderen Verstellhebels 20 (oder alternativ mit dem Sitzpolsterträger 10) gelenkverbunden ist. Hierdurch wird beim Vorklappen der Rückenlehne 3 und einer entsprechenden Betätigung des Koppelgliedes 5 mittels des Steuerelementes 4 die Bewegung des Koppelgliedes 5 über die Koppelstange 6 in den Verstellhebel 20 des Verstellmechanismus 2 eingeleitet, der dementsprechend im Uhrzeigersinn (weg von dem vorderen Anschlag A der Bodenbaugruppe B) verschwenkt wird, so dass der Sitzpolsterträger 10 abgesenkt und nach hinten verlagert wird, vergleiche Figur 5b.

Ferner ist bei diesem Ausführungsbeispiel das hintere Ende des Sitzpolsterträgers 10 mittels eines Gelenkbolzens 13 schwenkbar gelagert, das in einer schräg nach hinten/unten verlaufenden Führungskulisse 83 des Lehnenträgers 8 angeordnet ist. Dieser Gelenkbolzen 13 bewegt sich beim Vorklappen der Rückenlehne 3 und einer hierdurch über das Steuerelement 4 und das Koppelglied 5 ausgelösten Verlagerung des Sitzpolsterträgers 10 nach hinten/unten, so dass das hintere Ende des Sitzpolsterträgers 10 substanziell abgesenkt wird.

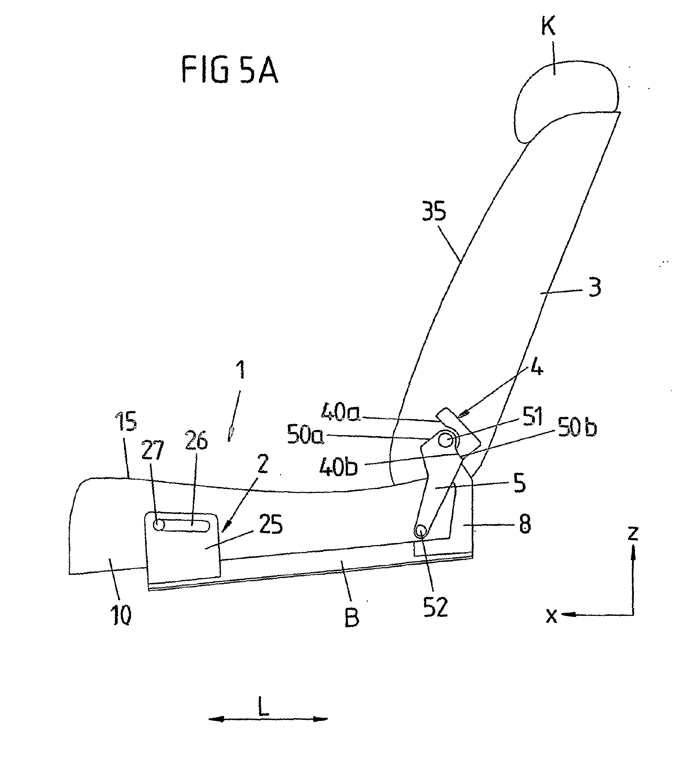

Bei der in Figur 5a gezeigten Abwandlung des Kraftfahrzeugsitzes aus Figur 1a ist der vordere Verstellhebel 20 des Verstellmechanismus 2 ersetzt durch eine Kulissenführung 26, 27 mit einer Führungskulisse 26, die sich in einer an der Bodenbaugruppe B befestigten Lasche 25 erstreckt, und mit einem am Sitzpolsterträger 10 angeordneten Führungsbolzen 27, der in der Führungskulisse 26 geführt ist.

Bei einem Vorklappen der Rückenlehne 3 in Richtung auf die Sitzfläche 15 des Sitzuntergestells 1 wird durch den Koppelmechanismus 4, 5 eine Bewegung des Führungsbolzens 27 in der Führungskulisse 26 nach hinten und/oder hinten und unten (je nach Erstreckungsrichtung der Führungskulisse 26) hervorgerufen, die zu einer Rückverlagerung und ggf. einem Absenken des Sitzpolsterträgers 10 führt, und zwar in gleicher Weise wie das anhand der Figuren 1 a und 1b erläuterte Verschwenken eines vorderen Verstellhebels 20 des Verstellmechanismus 2. Dies führt wiederum dazu, dass das Vorklappen der Rückenlehne 3 eine Rückverlagerung des Sitzpolsterträgers 10 sowie ggf. ein Absenken des vorderen Endes des Sitzpolsterträgers 10 bewirkt, vergleiche Figur 5b. Für ein stärkeres Absenken des Sitzpolsterträgers 10 kann die Führungskulisse stärker geneigt nach unten verlaufen und hierzu auch gekrümmt sein.

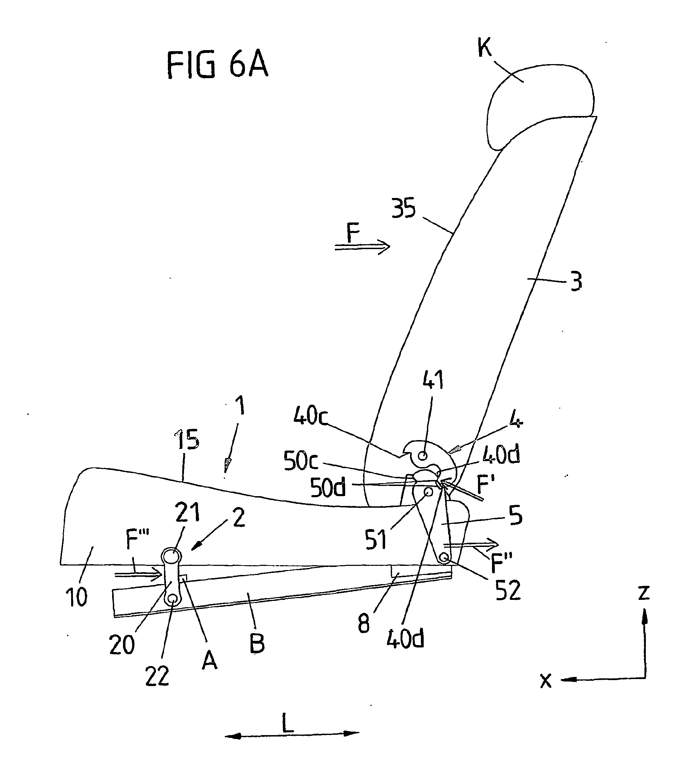

In Figur 6a ist eine Abwandlung des Kraftfahrzeugsitzes aus Figur 1a dargestellt, wobei der wesentliche Unterschied darin besteht, dass bei in Gebrauchsposition befindlicher Rückenlehne R der zweite Anschlag 40d des Steuerelementes 4 derart auf einen zugeordneten zweiten Anschlag 50d des Koppelelementes 5 einwirkt, dass das Sitzuntergestell 1 hierdurch in einer Richtung nach hinten kraftmäßig beaufschlagt ist. Dementsprechend ist der vordere, karosseriebodenseitige Anschlag A hierbei in Sitzlängsrichtung betrachtet hinter dem Verstellhebel 20 angeordnet, d.h., der Verstellhebel 20 ist in einer Richtung nach hinten gegen jenen Anschlag A vorgespannt.

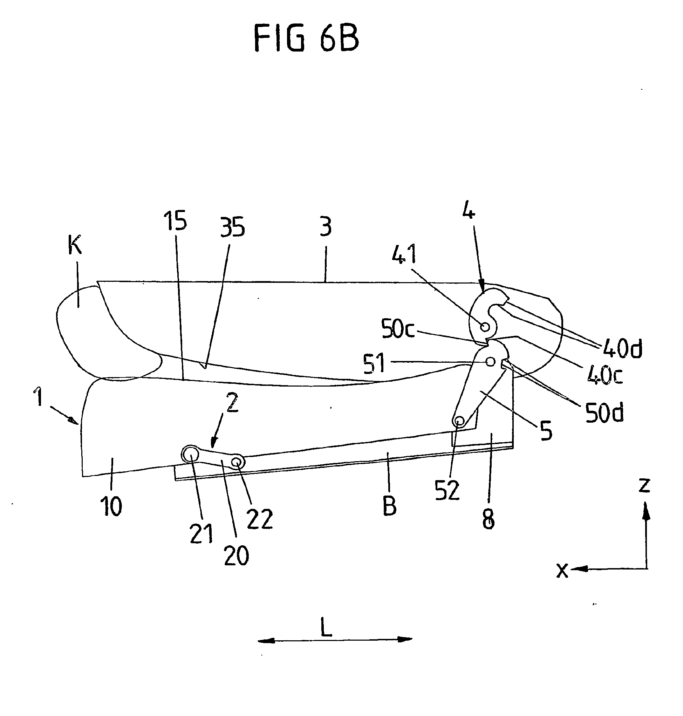

Bei einem Vorklappen der Rückenlehne wirkt nach einem entsprechenden Leerweg der erste Anschlag 40c des Steuerelementes 4 derart auf den zugeordneten ersten Anschlag 50c des Koppelgliedes 5 ein, dass das Koppelglied 5 den Sitzpolsterträger 10 mit seinem unteren Gelenkbolzen 52 nach vorne verschiebt, wobei der vordere Verstellhebel 20 des Verstellmechanismus 2 entgegen dem Uhrzeigersinn weg von dem vorderen Anschlag A verschwenkt wird. Dies führt zu einem Absenken des vorderen Endes des Sitzuntergestells 10 sowie zu einer Vorverlagerung des Sitzuntergestells 10 insgesamt, vergleiche Figur 6b. Es kann also - je nach den Platzverhältnissen in einem bestimmten Fahrzeugtyp - das Vorklappen der Rückenlehne wahlweise von einer Vorverlagerung oder einer Rückverlagerung des Sitzpolsterträgers 10 begleitet sein.

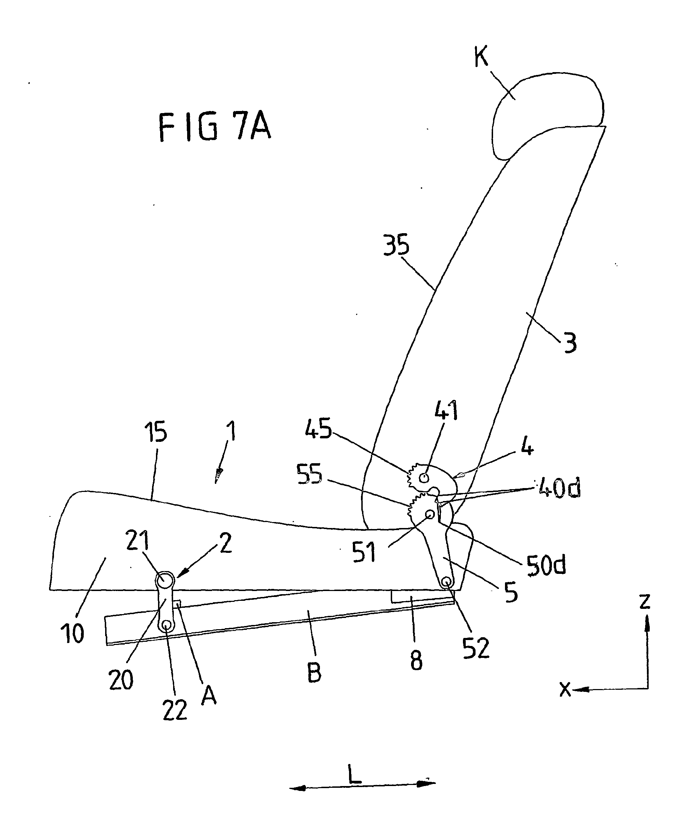

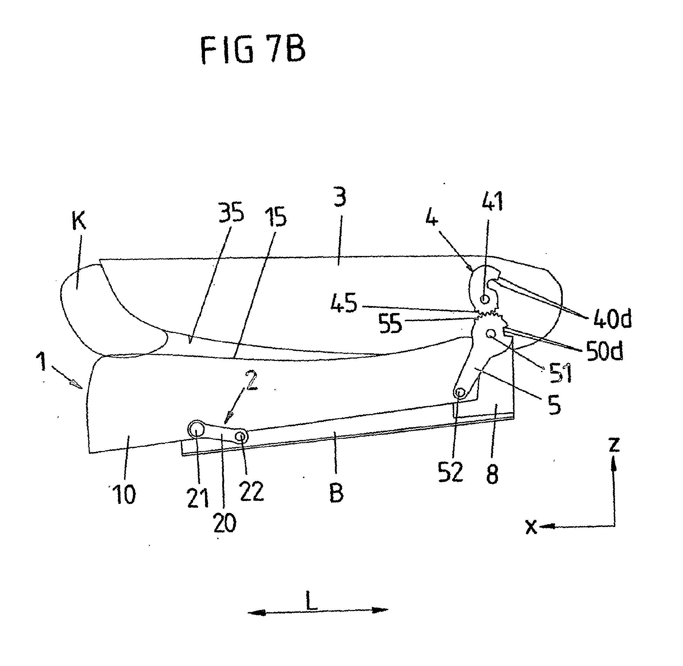

Figur 7a zeigt eine Weiterbildung des Kraftfahrzeugsitzes aus Figur 6a, bei der das Steuerelement 4 fest auf einer Achse 41 angeordnet ist und eine Verzahnung 45 aufweist, die bei einem Vorklappen der Rückenlehne mit einer zugeordneten Verzahnung 55 des Koppelgliedes 5 zusammenwirkt, um ein Absenken und eine Verlagerung des Sitzpolsterträgers 10 nach vorne zu bewirken, vergleiche Figur 7b. Dabei kann durch entsprechende Gestaltung der einander zugeordneten Verzahnungsbereiche 45, 55 des Steuerelementes 4 einerseits und des Koppelgliedes 5 andererseits gezielt ein Übersetzungsverhältnis eingestellt werden, um den Umfang der Verlagerung des Sitzpolsterträgers 10 beim Vorklappen der Rückenlehne 3 festzulegen.

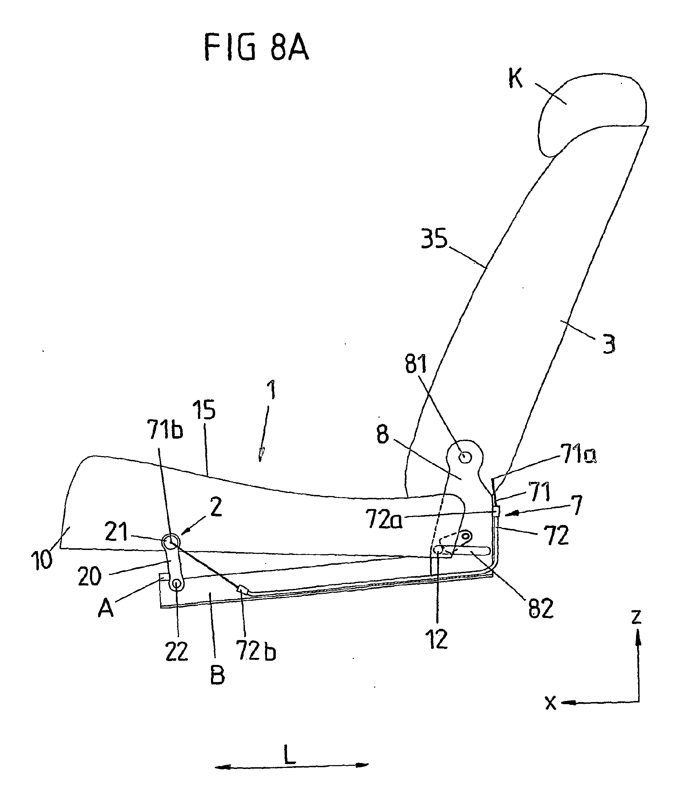

Bei dem in Figur 8a dargestellten Fahrzeugsitz ist die Rückenlehne 3 mit dem Sitzuntergestell 1 über einen Bowdenzug 7 gekoppelt, der eine in einer Bowdenhülle 72 geführte Seele 71 aufweist. Ein Ende 71 a der Seele 71 ist in einer Bowdeneinhängung an der Rückenlehne 3 befestigt und das andere Ende 71 b der Seele 71 ist am oberen Gelenk 21 des vorderen Verstellhebels 20 des Verstellmechanismus 2 oder am Sitzpolsterträger 10 festgelegt. Die beiden Enden 72a, 72b der Bowdenhülle 72 sind demgegenüber unbeweglich an jeweils einer karossieriefesten Baugruppe 8, B festgelegt.

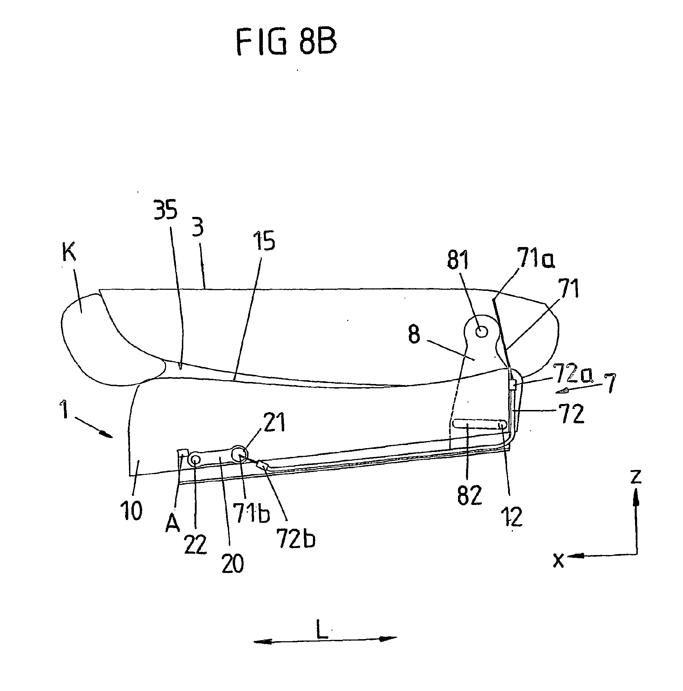

Ein Vorklappen der Rückenlehne 3 um ihre Schwenkachse 81 auf die Sitzfläche 15 des Sitzuntergestells 1 führt zu einer Straffung der Seele 71 des Bowdenzugs 7, wodurch der Schwenkhebel 20 des Verstellmechanismus 2 im Uhrzeigersinn verschwenkt wird, was zu einer Absenkung des vorderen Endes des Sitzpolsterträgers 10 sowie zu einer Verlagerung des Sitzpolsterträgers 10 nach hinten führt, vergleiche Figur 8b. Das hintere Ende des Sitzpolsterträgers 10 ist dabei mittels eines Bolzens 12 in einer Längsführung 82 des Lehnenträgers 8 geführt.

Ein Verschwenken des Verstellhebels 20 entgegen dem Uhrzeigersinn wird durch einen karosseriefesten Anschlag A vor dem Verstellhebel 20 verhindert, so dass das Sitzuntergestell 1 bei in Gebrauchsposition befindlicher, aufrechter Rückenlehne (vergleiche Figur 8a) gegen eine Vorverlagerung gesichert ist.

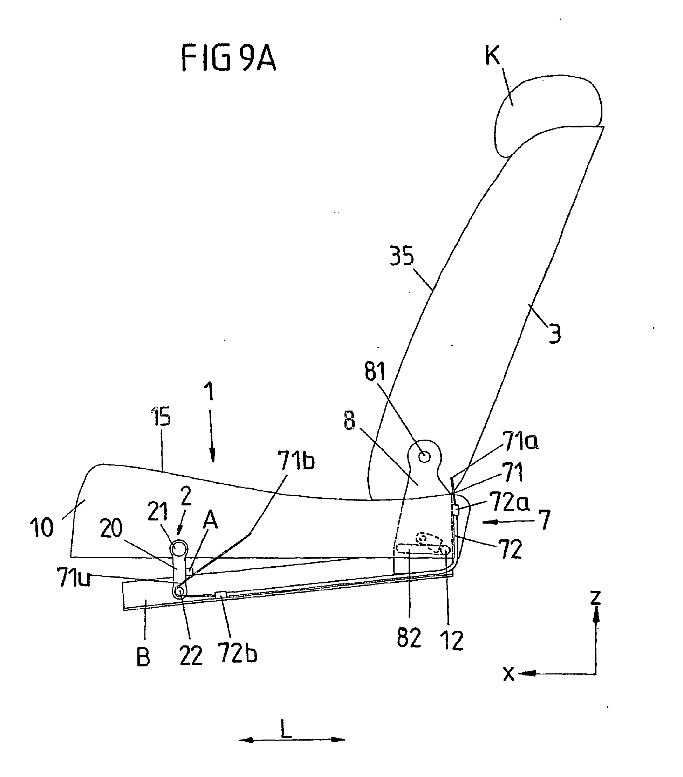

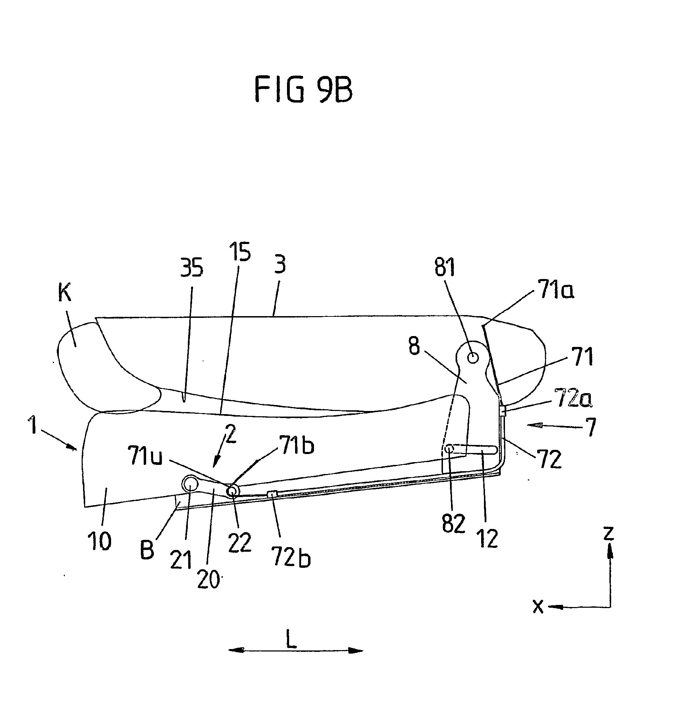

Bei dem in Figur 9a gezeigten Fahrzeugsitz weist der Bowdenzug 7 im Unterschied zu dem in Figur 8a gezeigten Fahrzeugsitz eine Umkehrstelle 71 u der Seele 71 im Bereich des vorderen Verstellhebels 20 auf und die Seele 71 des Bowdenzugs 7 ist dort hinter diesen Verstellhebel an den Sitzpolsterträger 10 geführt und dort mit einem Ende 71 b befestigt. Dies führt dazu, dass bei einem Vorklappen der Rückenlehne 3 der vordere Verstellhebel 20 entgegen dem Uhrzeigersinn verschwenkt wird, was neben einer Absenkung eine Vorverlagerung des Sitzpolsterträgers 10 zur Folge hat, die von einer entsprechenden Verschiebung eines Gelenkbolzens 12 des Sitzpolsterträgers 10 in einer Führungskulisse 82 des Lehnenträgers 8 begleitet wird, vergleiche Figur 9b.

Eine Rückverlagerung des Sitzpolsterträgers 10, insbesondere in der Gebrauchsposition der Rückenlehne 3, ist hier durch einen hinter dem vorderen Verstellhebel 20 karosseriefest angeordneten Anschlag A ausgeschlossen.

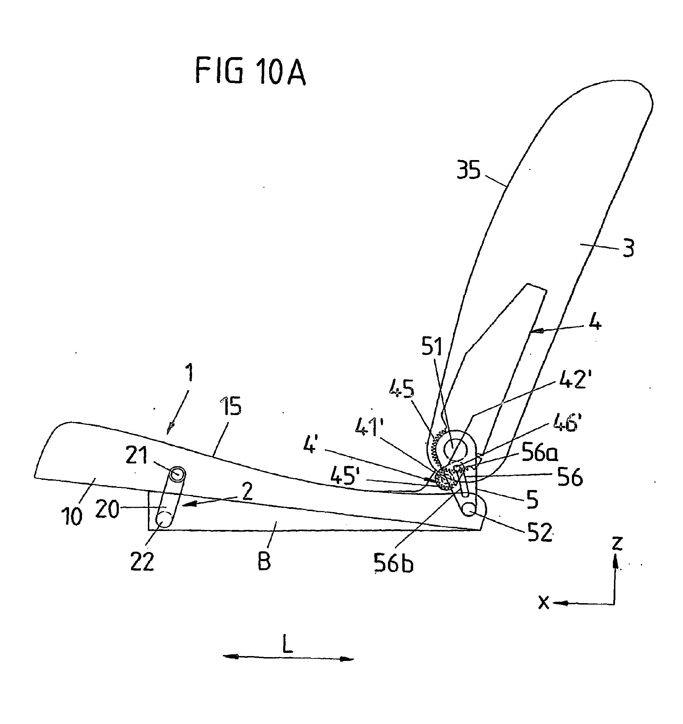

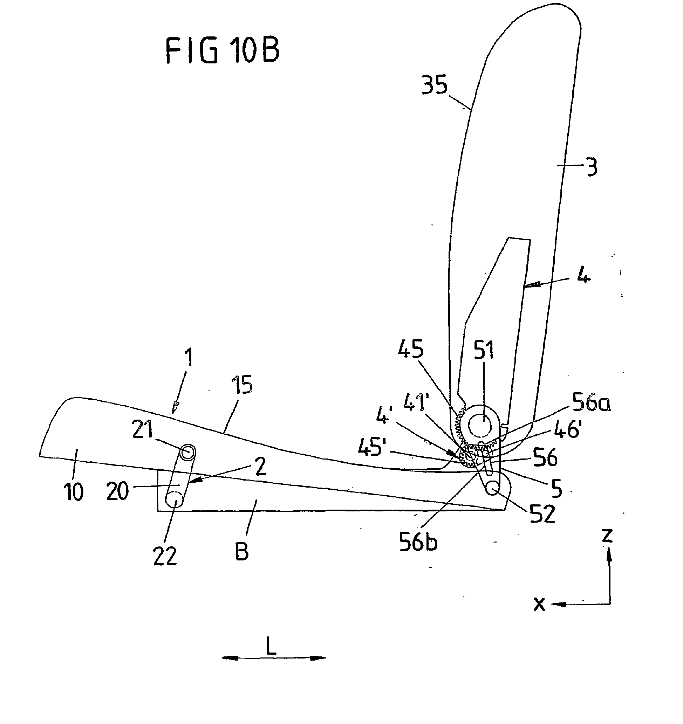

Figur 10a zeigt eine Weiterbildung des Kraftfahrzeugsitzes aus Figur 7a, wobei das Steuerelement 4 der Rückenlehne 3 eine Verzahnung 45 aufweist, der eine Verzahnung 45' eines dem Steuerelement 4 nachgeordneten, um eine Achse 41' verschwenkbar gelagerten Hebels 4' mit einem Steuernocken 42' zugeordnet ist. Der Steuernocken 42' weist einen Führungsbolzen 46' auf, der in einer Kulisse 56 des Koppelgliedes 5 geführt ist. Diese Führungskulisse 56 des Koppelgliedes 5 weist einen gekrümmten ersten Abschnitt 56a mit einem derartigen Krümmungsradius auf, dass bei einem Vorklappen der Rückenlehne 3 und einem hierdurch ausgelösten Verschwenken des Steuerelementes 4 sowie des Steuernockens 42' der Führungsbolzen 46' des Steuernockens 42' frei in dem ersten Abschnitt 56a des Koppelgliedes 56 verschoben werden kann, ohne das Koppelglied 5 zu betätigen. Dies ist darauf zurückzuführen, dass der Krümmungsradius des ersten Abschnittes 56a der Führungskulisse 56 dem Abstand des Führungsbolzens 46' des Steuernockens 42' von dessen Schwenkachse 41' entspricht. Dadurch kann die Rückenlehne 3 um ihre in Figur 10a gezeigte Gebrauchsposition, in der sie im Wesentlichen senkrecht von der Sitzfläche 15 des Sitzuntergestells 1 nach oben (entlang der vertikalen Fahrzeugachse z) absteht, begrenzt nach vorne verschwenkt werden, ohne das Koppelglied 5 zu betätigen, über das die Rückenlehne 3 mit dem Sitzuntergestell 1 gekoppelt ist, vergl. Fig. 10b. Der Umfang der möglichen Verstellung der Lehnenneigung in der Gebrauchsposition hängt ab von der Länge des gekrümmten Abschnittes 56a der Führungskulisse 56 sowie von der Übersetzung, die durch die einander zugeordneten Verzahnungsbereiche 45, 45' des Steuerelementes 4 einerseits und des nachgeordneten Hebels 4' andererseits erreicht wird.

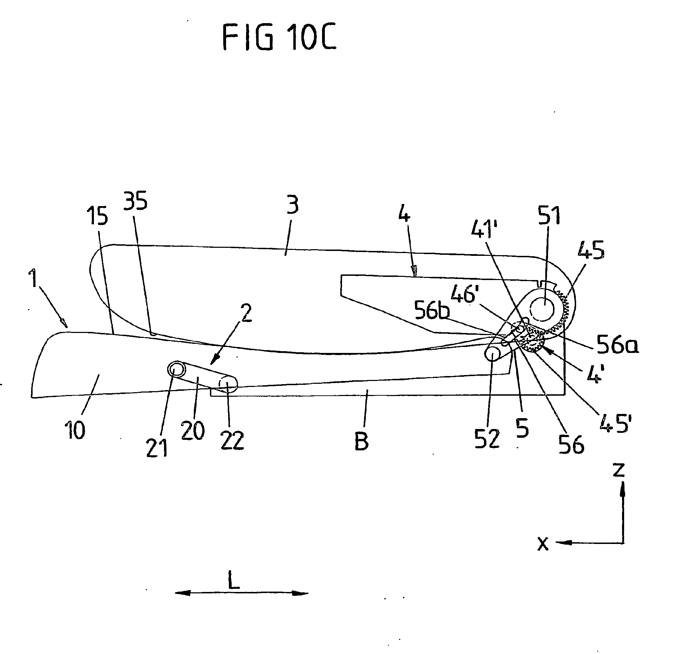

An den gekrümmten ersten Abschnitt 56a der Führungskulisse 56 des Koppelgliedes 5 schließt sich ein zweiter, geradliniger Abschnitt 56b an, in dem sich der Führungsbolzen 46' des Steuernockens 42' bei einem weiteren Vorklappen der Rückenlehne 3 (über die in Figur 10b gezeigte Schwenklage hinaus) bewegt und dabei hin und her wandert. Dies führt zu einer Betätigung des Koppelgliedes 5 beim weiteren Vorklappen der Rückenlehne 3, so dass der Sitzpolsterträger 10 - begleitet von einem Verschwenken des vorderen Verstellhebels 20 des Verstellmechanismus 2 entgegen dem Uhrzeigersinn - nach vorne verlagert und im Bereich seines vorderen Endes abgesenkt wird, vergleiche Figur 10c. Dabei kann durch geeignete Ausbildung der Verzahnungsbereiche 45, 45' am Steuerelement 4 einerseits und am nachgeordneten Hebel 4' andererseits ein Übersetzungsverhältnis so eingestellt werden, dass eine bestimmte, gewünschte Vorverlagerung des Sitzpolsterträgers 10 erreicht wird. Das Übersetzungsverhältnis bewirkt dabei insbesondere, dass ein Vorklappen der Rückenlehne 3 um einen bestimmten Winkel in eine Schwenkbewegung des Steuernockens 42' um einen anderen, durch das Übersetzungsverhältnis bestimmten Winkel umgesetzt wird. Das Ausmaß der Schwenkbewegung des Steuernockens 42' bestimmt wiederum das Ausmaß der Bewegung des Koppelgliedes 5 und damit des Sitzuntergestells 1.

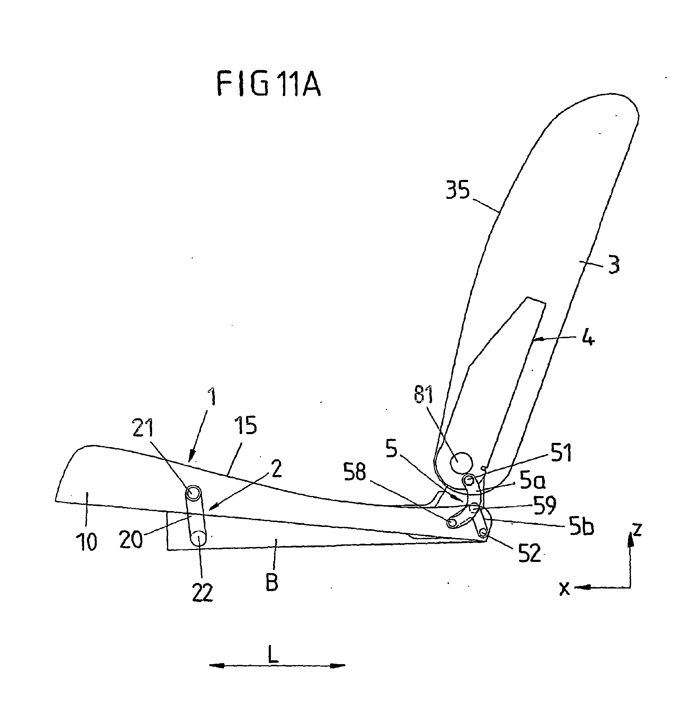

Bei dem in Figur 11a dargestellten Kraftfahrzeugsitz ist das Koppelglied 5 zweiteilig ausgebildet und besteht aus einem ersten Koppelhebel 5a sowie einem zweiten Koppelhebel 5b.

Der erste Koppelhebel 5a ist mit seinem oberen Gelenk 51 am Steuerelement 4 angelenkt und der zweite Koppelhebel 5b ist mit seinem unteren Gelenk 52 am Sitzpolsterträger 10 angelenkt und dient gleichzeitig zur schwenkbaren Lagerung des Sitzpolsterträgers 10 im Bereich seines hinteren Endes. Über ein weiteres Gelenk 58 sind die beiden Koppelhebel 5a, 5b miteinander verbunden und der zweite Koppelhebel 5b ist außerdem um eine Achse 59 verschwenkbar am Lehnenträger 8 gelagert.

Es bildet hier also das Koppelglied 5 ein Gelenkhebelpaar 5a, 5b zur Kopplung der Rückenlehne 3 mit dem Sitzpolsterträger 10, wobei das Gelenkhebelpaar 5a, 5b beim Vorklappen der Rückenlehne 3 durch das mit der Rückenlehne 3 verbundene Steuerelement 4 betätigt wird. Durch die Längen der Hebelarme kann dabei das Übersetzungsverhältnis bei der Koppelung der Rückenlehne an den Sitzpolsterträger 10 festgelegt werden.

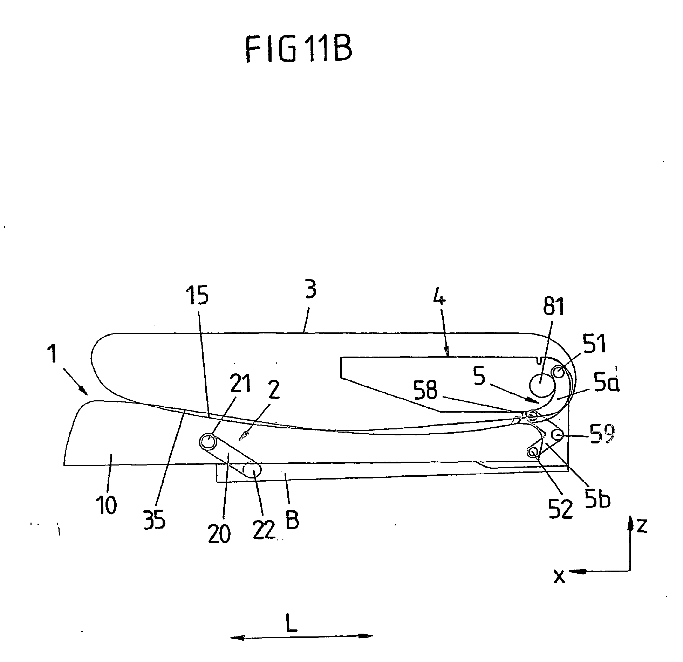

Im Übrigen wird bei diesem Ausführungsbeispiel, ebenso wie bei dem anhand der Figuren 10a und 10b dargestellten Fahrzeugsitz, bei einem Vorklappen der Rückenlehne 3 um die Lehnenachse 81 auf die Sitzfläche 15 des Sitzuntergestells 1 gemäß Fig. 11 b ein Absenken des vorderen Endes des Sitzpolsterträgers 10 sowie eine Vorverlagerung des Sitzpolsterträgers 10 durch Verschwenken des vorderen Verstellhebels 20 des Verstellmechanismus 2, ausgelöst durch Betätigung des Koppelgliedes 5, erreicht.

## Patentansprüche

1. Kraftfahrzeugsitz, insbesondere Rücksitz für ein Kraftfahrzeug mit
- einem Sitzuntergestell(1), das eine Sitzfläche (15) für einen Sitzbenutzer definiert,
- einer Rückenlehne (3), die aus einer Gebrauchsposition heraus, in der sie den Rücken eines Sitzbenutzers abstützen kann, auf das Sitzuntergestell (1) vorklappbar ist, und
- einem Verstellmechanismus (2) des Sitzuntergestells (1), über den das Sitzuntergestell (1) derart mit einer Bodenbaugruppe (B) eines Kraftfahrzeugs verbindbar ist, dass die Lage des Sitzuntergestells (1) bezüglich der Bodenbaugruppe (B) verstellbar ist,
- wobei die Rückenlehne (3) über einen Koppelmechanismus (4, 5) derart mit dem Sitzuntergestell (1) gekoppelt ist, dass das Sitzuntergestell (1) durch das Vorklappen der Rückenlehne (3) in Sitzlängsrichtung (L) verschoben und/oder hinsichtlich seines Abstandes von der Bodenbaugruppe (B) verstellt wird und wobei der Koppelmechanismus (4, 5) ein Steuerelement (4) aufweist, das beim Verschwenken der Rückenlehne (3) gemeinsam mit dieser bewegt wird und hierdurch den Koppelmechanismus (4, 5) derart betätigt, dass dieser auf den Verstellmechanismus (2) des Sitzuntergestells (1) einwirkt,
**dadurch gekennzeichnet,**
**dass**
a) das Steuerelement (4) derart fest mit der Rückenlehne (3) verbunden ist, dass es beim Vorklappen der Rückenlehne (3) gemeinsam mit dieser verschwenkt wird,
b) der Koppelmechanismus (4, 5) ein dem Steuerelement (4) nachgeordnetes Koppelglied (5) aufweist, das einerseits mit der Rückenlehne (3) und andererseits mit dem Sitzuntergestell (1) in Wirkverbindung steht und beim Vorklappen der Rückenlehne (3) durch das Steuerelement (4) betätigt wird, und
c) das Steuerelement (4) als einen Bestandteil ein Blockierelement (40b, 40d) aufweist, das bei in Gebrauchsposition befindlicher Rückenlehne (3) derart auf das Koppelglied (5) einwirkt, dass das Sitzuntergestell (1) gegen eine Verschiebung in Sitzlängsrichtung (L) und/oder ein Absenken gesichert ist.

2. Kraftfahrzeugsitz nach Anspruch 1, **dadurch gekennzeichnet, dass** das Sitzuntergestell (1) durch Einwirkung der Rückenlehne (3) auf den Verstellmechanismus (4, 5) beim Vorklappen der Rückenlehne (3) verlagert wird.

3. Kraftfahrzeugsitz nach Anspruch 1 oder 2, **dadurch gekennzeichnet, dass** der Koppelmechanismus (4, 5) mit einem Sitzpolsterträger (10) des Sitzuntergestells (1) verbunden ist, der zur Aufnahme eines Sitzpolsters dient.

4. Kraftfahrzeugsitz nach Anspruch 1 oder 2, **dadurch gekennzeichnet, dass** der Koppelmechanismus (4, 5) mit einem Element (20) des Verstellmechanismus (2) verbunden ist.

5. Kraftfahrzeugsitz nach einem der vorhergehenden Ansprüche, **dadurch gekennzeichnet, dass** das Steuerelement (4) elastisch ausgebildet ist.

6. Kraftfahrzeugsitz nach Anspruch 4 oder 5, **dadurch gekennzeichnet, dass** das Steuerelement (4) über elastische Mittel an der Rückenlehne (3) positioniert ist, so dass das Steuerelement (4) begrenzt bezüglich der Rückenlehne (3) bewegbar ist.

7. Kraftfahrzeugsitz nach einem der vorhergehenden Ansprüche, **dadurch gekennzeichnet, dass** das Steuerelement fest mit einem nachgeordneten Element des Koppelmechanismus verbunden ist.

8. Kraftfahrzeugsitz nach einem der vorhergehenden Ansprüche, **dadurch gekennzeichnet, dass** das Steuerelement (4) separat von einem nachgeordneten Element (4', 5) des Koppelmechanismus (4, 5) ausgebildet ist und beim Verschwenken der Rückenlehne (3) derart auf dieses einwirkt, dass der Koppelmechanismus (4, 5) betätigt wird.

9. Kraftfahrzeugsitz nach einem der vorhergehenden Ansprüche, **dadurch gekennzeichnet, dass** das Steuerelement (4) über einen Verzahnungsbereich (45) auf einen Verzahnungsbereich (45', 55) eines nachgeordneten Elementes (4', 5) des Koppelmechanismus (4, 5) einwirkt.

10. Kraftfahrzeugsitz nach Anspruch 8, **dadurch gekennzeichnet, dass** das Steuerelement (4) über einen Anschlag (40a, 40c) auf einen Anschlag (50a, 50c) des nachgeordneten Elementes (5) einwirkt.

11. Kraftfahrzeugsitz nach Anspruch 8, **dadurch gekennzeichnet, dass** das Steuerelement (4) über eine gemeinsame Hebelachse (51) auf das nachgeordnete Element (5) einwirkt.

12. Kraftfahrzeugsitz nach einem der Ansprüche 8 bis 11, **dadurch gekennzeichnet, dass** das Steuerelement (4) beim Vorklappen der Rückenlehne (3) den Koppelmechanismus (4, 5) erst betätigt, nachdem die Rückenlehne (3) um einen vorgebbaren Mindestwinkel vorgeklappt worden ist.

13. Kraftfahrzeugsitz nach Anspruch 12, **dadurch gekennzeichnet, dass** das Steuerelement (4) beim Vorklappen der Rückenlehne (3) auf das nachgeordnete Element (5) erst einwirkt, nachdem die Rückenlehne (3) um einen vorgebbaren Mindestwinkel vorgeklappt worden ist.

14. Kraftfahrzeugsitz nach einem der vorhergehenden Ansprüche, **dadurch gekennzeichnet, dass** das Koppelglied (5) dem Steuerelement (4) unmittelbar nachgeordnet ist, so dass das Steuerelement (4) beim Vorklappen der Rückenlehne (3) unmittelbar auf das Koppelglied (5) einwirkt.

15. Kraftfahrzeugsitz nach einem der vorhergehenden Ansprüche, **dadurch gekennzeichnet, dass** das Koppelglied (5) dem Steuerelement (4) mittelbar nachgeordnet ist, so dass das Steuerelement (4) beim Vorklappen der Rückenlehne (3) auf das Koppelglied (5) über ein weiteres Element (4') des Koppelmechanismus (4, 5) einwirkt.

16. Kraftfahrzeugsitz nach Anspruch 15, **dadurch gekennzeichnet, dass** das weitere Element (4') einen Steuernocken (42') aufweist.

17. Kraftfahrzeugsitz nach Anspruch 16, **dadurch gekennzeichnet, dass** das weitere Element (4') eine Verzahnung (45') für das Zusammenwirken mit dem Steuerelement (4) aufweist.

18. Kraftfahrzeugsitz nach Anspruch 16 oder 17, **dadurch gekennzeichnet, dass** der Steuernocken (42') über eine Kulissenführung (46, 56) mit dem Koppelglied (5) zusammenwirkt.

19. Kraftfahrzeugsitz nach einem der vorhergehenden Ansprüche, **dadurch gekennzeichnet, dass** das Koppelglied (5) mit dem Sitzpolsterträger (10) des Sitzuntergestells (1) verbunden ist.

20. Kraftfahrzeugsitz nach einem der vorhergehenden Ansprüche, **dadurch gekennzeichnet, dass** das Koppelglied (5) mit dem Verstellmechanismus (2) des Sitzuntergestells (1) verbunden ist.

21. Kraftfahrzeugsitz nach einem der vorhergehenden Ansprüche 15 bis 20, **dadurch gekennzeichnet, dass** das Koppelglied (5) durch mindestens einen Koppelhebel gebildet wird.

22. Kraftfahrzeugsitz nach einem der Ansprüche 15 bis 20, **dadurch gekennzeichnet, dass** das Koppelglied (5) durch einen Bowdenzug gebildet wird.

23. Kraftfahrzeugsitz nach einem vorhergehenden Ansprüche, **dadurch gekennzeichnet, dass** der Verstellmechanismus (2) einen Verstellhebel (20) zum Absenken und/oder Verlagern des Sitzuntergestells (1) in Sitzlängsrichtung (L) aufweist, der einerseits am Sitzuntergestell (1) angelenkt und andererseits mit einer Bodenbaugruppe (B) eines Kraftfahrzeugs verbindbar ist.

24. Kraftfahrzeugsitz nach einem der Ansprüche 1 bis 22, **dadurch gekennzeichnet, dass** der Verstellmechanismus (2) eine Kulissenführung (26, 27) zum Absenken und/oder Verlagern des Sitzuntergestells (1) in Sitzlängsrichtung (L) aufweist, über die das Sitzuntergestell (1) mit einer Bodenbaugruppe (B, 25) eines Kraftfahrzeugs zusammenwirkt.

25. Kraftfahrzeugsitz nach Anspruch 23 oder 24, **dadurch gekennzeichnet, dass** der Verstellhebel (20) bzw. die Kulissenführung (26, 27) im Bereich des vorderen Endes des Sitzuntergestells (1) vorgesehen ist.

26. Kraftfahrzeugsitz nach einem der vorhergehenden Ansprüche, **dadurch gekennzeichnet, dass** das Sitzuntergestell (1) im Bereich seines hinteren Endes schwenkbar gelagert ist.

27. Kraftfahrzeugsitz nach Anspruch 26, **dadurch gekennzeichnet, dass** das Sitzuntergestell (1) im Bereich seines hinteren Endes schwenkbar am Koppelglied (5) gelagert ist.

28. Kraftfahrzeugsitz nach Anspruch 26, **dadurch gekennzeichnet, dass** das Sitzuntergestell (1) im Bereich seines hinteren Endes schwenkbar an einer karosseriefesten Baugruppe (B, 8) gelagert ist.

29. Kraftfahrzeugsitz nach einem der Ansprüche 26 bis 28, **dadurch gekennzeichnet, dass** die Anlenkstelle (52) in einer Längsführung (82) beweglich geführt ist.

30. Kraftfahrzeugsitz nach einem der vorhergehenden Ansprüche, **dadurch gekennzeichnet, dass** ein Anschlag (A) vorgesehen ist, gegen den das Sitzuntergestell (1) aufgrund der vom Koppelmechanismus (4, 5) übertragenen Stützkräfte (F) gedrückt wird.

31. Kraftfahrzeugsitz nach einem der vorhergehenden Ansprüche, **dadurch gekennzeichnet, dass** das Blockierelement (40b, 40d) einstückig mit dem Steuerelement (4) ausgebildet ist.

32. Kraftfahrzeugsitz nach Anspruch 31, **dadurch gekennzeichnet, dass** das Blockierelement (40b, 40d) als Anschlagfläche des Steuerelementes (4) ausgebildet ist.

33. Kraftfahrzeugsitz nach einem der vorhergehenden Ansprüche, **dadurch gekennzeichnet, dass** das Steuerelement (4) über einen Übersetzungsmechanismus auf den Koppelmechanismus (4, 5) einwirkt.

34. Kraftfahrzeugsitz nach Anspruch 33, **dadurch gekennzeichnet, dass** der Übersetzungsmechanismus durch Zusammenwirken von Verzahnungsbereichen (45, 45'; 45, 55) gebildet wird.

35. Kraftfahrzeugsitz nach Anspruch 33, **dadurch gekennzeichnet, dass** der Übersetzungsmechanismus durch Hebelelemente (5a, 5b) gebildet wird.

## Claims

1. Motor vehicle seat, in particular a rear seat for a motor vehicle, with
- a seat underframe (1) which defines a seat surface (15) for a seat user,
- a backrest (3) which can be folded forwards from a use position, in which it can support a seat user's back, onto the seat underframe (1), and
- an adjusting mechanism (2) of the seat underframe (1), via which the seat underframe (1) can be connected to a floor subassembly (B) of a motor vehicle in such a manner that the position of the seat underframe (1) can be adjusted in relation to the floor subassembly (B),
- wherein the backrest (3) is coupled to the seat underframe (1) via a coupling mechanism (4, 5) in such a manner that the seat underframe (1) is displaced in the longitudinal direction (L) of the seat by the backrest (3) being folded forwards, and/or is adjusted with respect to its distance from the floor subassembly (B), and wherein the coupling mechanism (4, 5) has a control element (4) which, when the backrest (3) is pivoted, is moved together therewith and thereby actuates the coupling mechanism (4, 5) in such a manner that the latter acts on the adjusting mechanism (2) of the seat underframe (1),
**characterized**
**in that**
a) the control element (4) is connected fixedly to the backrest (3) in such a manner that it is pivoted together with the backrest (3) when the latter is folded forwards,
b) the coupling mechanism (4, 5) has a coupling link (5) which is arranged downstream of the control element (4) and is operatively connected on one side to the backrest (3) and on the other side to the seat underframe (1) and is actuated by the control element (4) when the backrest (3) is folded forwards, and
c) the control element (4) has, as a constituent part, a blocking element (40b, 40d) which, when the backrest (3) is in the use position, acts on the coupling link (5) in such a manner that the seat underframe (1) is secured against displacement in the longitudinal direction (L) of the seat and/or against lowering.

2. Motor vehicle seat according to Claim 1, **characterized in that** the seat underframe (1) is displaced by the action of the backrest (3) on the adjusting mechanism (4, 5) when the backrest (3) is folded forwards.

3. Motor vehicle seat according to Claim 1 or 2, **characterized in that** the coupling mechanism (4, 5) is connected to a seat cushion carrier (10) of the seat underframe (1), said seat cushion carrier serving to receive a seat cushion.

4. Motor vehicle seat according to Claim 1 or 2, **characterized in that** the coupling mechanism (4, 5) is connected to an element (20) of the adjusting mechanism (2).

5. Motor vehicle seat according to one of the preceding claims, **characterized in that** the control element (4) is of elastic design.

6. Motor vehicle seat according to Claim 4 or 5, **characterized in that** the control element (4) is positioned on the backrest (3) via elastic means such that the control element (4) is movable to a limited extent in relation to the backrest (3).

7. Motor vehicle seat according to one of the preceding claims, **characterized in that** the control element is connected fixedly to a downstream element of the coupling mechanism.

8. Motor vehicle seat according to one of the preceding claims, **characterized in that** the control element (4) is formed separately from a downstream element (4', 5) of the coupling mechanism (4, 5) and acts on the backrest (3), when the latter is pivoted, in such a manner that the coupling mechanism (4, 5) is actuated.

9. Motor vehicle seat according to one of the preceding claims, **characterized in that** the control element (4) acts on a toothing region (45', 55) of a downstream element (4', 5) of the coupling mechanism (4, 5) via a toothing region (45).

10. Motor vehicle seat according to Claim 8, **characterized in that** the control element (4) acts on a stop (50a, 50c) of the downstream element (5) via a stop (40a, 40c).

11. Motor vehicle seat according to Claim 8, **characterized in that** the control element (4) acts on the downstream element (5) via a common fulcrum (51).

12. Motor vehicle seat according to one of Claims 8 to 11, **characterized in that**, when the backrest (3) is folded forwards, the control element (4) actuates the coupling mechanism (4, 5) only after the backrest (3) has been folded forwards through a predeterminable minimum angle.

13. Motor vehicle seat according to Claim 12, **characterized in that,** when the backrest (3) is folded forwards, the control element (4) acts on the downstream element (5) only after the backrest (3) has been folded forwards through a predeterminable minimum angle.

14. Motor vehicle seat according to one of the preceding claims, **characterized in that** the coupling link (5) is arranged directly downstream of the control element (4) such that the control element (4) acts directly on the coupling link (5) when the backrest (3) is folded forwards.

15. Motor vehicle seat according to one of the preceding claims, **characterized in that** the coupling link (5) is arranged indirectly downstream of the control element (4) such that the control element (4) acts on the coupling link (5) via a further element (4') of the coupling mechanism (4, 5) when the backrest (3) is folded forwards.

16. Motor vehicle seat according to Claim 15, **characterized in that** the further element (4') has a control cam (42').

17. Motor vehicle seat according to Claim 16, **characterized in that** the further element (4') has a toothing (45') for the interaction with the control element (4).

18. Motor vehicle seat according to Claim 16 or 17, **characterized in that** the control cam (42') interacts with the coupling link (5) via a slotted guide mechanism (46, 56).

19. Motor vehicle seat according to one of the preceding claims, **characterized in that** the coupling link (5) is connected to the seat cushion carrier (10) of the seat underframe (1).

20. Motor vehicle seat according to one of the preceding claims, **characterized in that** the coupling link (5) is connected to the adjusting mechanism (2) of the seat underframe (1).

21. Motor vehicle seat according to one of the preceding claims 15 to 20, **characterized in that** the coupling link (5) is formed by at least one coupling lever.

22. Motor vehicle seat according to one of Claims 15 to 20, **characterized in that** the coupling link (5) is formed by a Bowden cable.

23. Motor vehicle seat according to one of the preceding claims, **characterized in that** the adjusting mechanism (2) has an adjusting lever (20) for lowering and/or displacing the seat underframe (1) in the longitudinal direction (L) of the seat, said adjusting lever being coupled on one side to the seat underframe (1) and being connectable on the other side to a floor subassembly (B) of a motor vehicle.

24. Motor vehicle seat according to one of Claims 1 to 22, **characterized in that** the adjusting mechanism (2) has a slotted guide mechanism (26, 27) for lowering and/or displacing the seat underframe (1) in the longitudinal direction (L) of the seat, the seat underframe (1) interacting with a floor subassembly (B, 25) of a motor vehicle via said slotted guide mechanism (26, 27).

25. Motor vehicle seat according to Claim 23 or 24, **characterized in that** the adjusting lever (20) or the slotted guide mechanism (26, 27) is provided in the region of the front end of the seat underframe (1).

26. Motor vehicle seat according to one of the preceding claims, **characterized in that** the seat underframe (1) is mounted pivotably in the region of its rear end.

27. Motor vehicle seat according to Claim 26, **characterized in that** the seat underframe (1) is mounted pivotably in the region of its rear end on the coupling link (5).

28. Motor vehicle seat according to Claim 26, **characterized in that** the seat underframe (1) is mounted pivotably in the region of its rear end on a subassembly (B, 8) mounted on the vehicle body.

29. Motor vehicle seat according to one of Claims 26 to 28, **characterized in that** the coupling point (52) is guided movably in a longitudinal guide (82).

30. Motor vehicle seat according to one of the preceding claims, **characterized in that** a stop (A), against which the seat underframe (1) is pressed on account of the supporting forces (F) transmitted by the coupling mechanism (4, 5), is provided.

31. Motor vehicle seat according to one of the preceding claims, **characterized in that** the blocking element (40b, 40d) is designed as a single piece with the control element (4).

32. Motor vehicle seat according to Claim 31, **characterized in that** the blocking element (40b, 40d) is designed as a stop surface of the control element (4).

33. Motor vehicle seat according to one of the preceding claims, **characterized in that** the control element (4) acts on the coupling mechanism (4, 5) via a transmission mechanism.

34. Motor vehicle seat according to Claim 33, **characterized in that** the transmission mechanism is formed by interaction of toothing regions (45, 45'; 45, 55).

35. Motor vehicle seat according to Claim 33, **characterized in that** the transmission mechanism is formed by lever elements (5a, 5b).

## Revendications

1. Siège de véhicule automobile, en particulier siège arrière pour un véhicule automobile, comprenant :
- un bâti de siège (1) qui définit une surface d'assise (15) pour un utilisateur du siège,
- un dossier (3), susceptible d'être rabattu vers l'avant, à partir d'une position d'utilisation dans laquelle il peut soutenir le dos d'un utilisateur du siège, jusque sur le bâti de siège (1), et
- un mécanisme de déplacement (2) du bâti de siège (1), au moyen duquel le bâti de siège (1) peut être relié au groupe structurel de plancher (B) d'un véhicule automobile de telle façon que la position du bâti de siège (1) est déplaçable par rapport au groupe structurel de plancher (B),
- dans lequel le dossier (3) est couplé via un mécanisme de couplage (4, 5) avec le bâti de siège (1) de telle façon que le bâti de siège (1) est déplacé en direction longitudinale du siège (L) par le rabattement du dossier (3) vers l'avant et/ou est déplaçable pour ce qui concerne sa distance depuis le groupe structurel de plancher (B), et dans lequel le mécanisme de couplage (4, 5) comprend un élément de commande (4) qui est déplacé conjointement avec le dossier (3) lors du pivotement de celui-ci et actionne de ce fait le mécanisme de couplage (4, 5) de telle façon que celui-ci agit sur le mécanisme de déplacement (2) du bâti de siège (1),
**caractérisé en ce que**
a) l'élément de commande (4) est relié fermement au dossier (3) de telle manière qu'il est pivoté conjointement avec celui-ci lors du rabattement du dossier (3) vers l'avant,
b) le mécanisme de couplage (4, 5) comprend un organe de couplage (5) agencé à la suite de l'élément de commande (4), qui est en liaison d'action d'une part avec le dossier (3) et d'autre part avec le bâti de siège (1) et qui est actionné par l'élément de commande (4) lors du rabattement du dossier (4) vers l'avant, et
c) l'élément de commande (4) comprend à titre de composante un élément de blocage (40b, 40d) qui agit sur l'organe de couplage (5), lorsque le dossier (3) se trouve en position d'utilisation, de telle façon que le bâti de siège (1) est bloqué à l'encontre d'une translation en direction longitudinale du siège (L) et/ou d'un abaissement.

2. Siège de véhicule automobile selon la revendication 1, **caractérisé en ce que** le bâti de siège (1) est déplacé par action du dossier (3) sur le mécanisme de déplacement (4, 4 5) lors du rabattement du dossier (3) vers l'avant.

3. Siège de véhicule automobile selon la revendication 1 ou 2, **caractérisé en ce que** le mécanisme de couplage (4, 5) est relié à un porte-coussin (10) du bâti de siège (1), qui sert à recevoir un coussin de siège.

4. Siège de véhicule automobile selon la revendication 1 ou 2, **caractérisé en ce que** le mécanisme de couplage (4, 5) est relié à un élément (20) du mécanisme de déplacement (2).

5. Siège de véhicule automobile selon l'une des revendications précédentes, **caractérisé en ce que** l'élément de commande (4) est réalisé élastique.

6. Siège de véhicule automobile selon la revendication 4 ou 5, **caractérisé en ce que** l'élément de commande (4) est positionnée via des moyens élastiques sur le dossier (3) de telle sorte que l'élément de commande (4) est déplaçable de façon limitée par rapport au dossier (3).

7. Siège de véhicule automobile selon l'une des revendications précédentes, **caractérisé en ce que** l'élément de commande est relié fermement à un élément du mécanisme de couplage disposé à la suite.

8. Siège de véhicule automobile selon l'une des revendications précédentes, **caractérisé en ce que** l'élément de commande (4) est réalisé séparément par rapport à un élément (4', 5) du mécanisme de couplage (4, 5) disposé à la suite, et agit, lors du pivotement du dossier (3), sur celui-ci de telle façon que le mécanisme de couplage (4, 5) est actionné.

9. Siège de véhicule automobile selon l'une des revendications précédentes, **caractérisé en ce que** l'élément de commande (4) agit via une zone dentée (45) sur une zone dentée (45', 55) d'un élément (4', 5) du mécanisme de couplage (4, 5) disposé à la suite.

10. Siège de véhicule automobile selon la revendication 8, **caractérisé en ce que** l'élément de commande (4) agit via une butée (40a, 40c) sur une butée (50a, 50c) de l'élément (5) disposé à la suite.

11. Siège de véhicule automobile selon la revendication 8, **caractérisé en ce que** l'élément de commande (4) agit via un axe de levier commun (51) sur l'élément (5) disposé à la suite.

12. Siège de véhicule automobile selon l'une des revendications 8 à 11, **caractérisé en ce que,** lors du rabattement du dossier (3) vers l'avant, l'élément de commande (4) actionne le mécanisme de couplage (4, 5) uniquement après que le dossier (3) a été rabattu d'un angle minimum prédéterminé.

13. Siège de véhicule automobile selon la revendication 12, **caractérisé en ce que,** lors du rabattement du dossier (3) vers l'avant, l'élément de commande (4) agit sur l'élément disposé à la suite (5) uniquement après que le dossier (3) a été rabattu d'un angle minimum prédéterminé.

14. Siège de véhicule automobile selon l'une des revendications précédentes, **caractérisé en ce que** l'organe de couplage (5) est disposé immédiatement à la suite de l'élément de commande (4), de sorte que l'élément de commande (4) agit directement sur l'organe de couplage (5) lors du rabattement du dossier (3) vers l'avant.

15. Siège de véhicule automobile selon l'une des revendications précédentes, **caractérisé en ce que** l'organe d'accouplement (5) est disposé immédiatement à la suite de l'élément de commande (4), de sorte que l'élément de commande (4) agit, lors du rabattement du dossier (3) vers l'avant, sur l'organe d'accouplement (5) via un autre élément (4') du mécanisme de couplage (4, 5).

16. Siège de véhicule automobile selon la revendication 15, **caractérisé en ce que** l'autre élément (4') comprend une came de commande (42').

17. Siège de véhicule automobile selon la revendication 16, **caractérisé en ce que** l'autre élément (4') comporte une denture (45') pour la coopération avec l'élément de commande (4).

18. Siège de véhicule automobile selon la revendication 16 ou 17, **caractérisé en ce que** la came de commande (42') coopère avec l'organe d'accouplement (5) via un guidage à glissière (46, 56).

19. Siège de véhicule automobile selon l'une des revendications précédentes, **caractérisé en ce que** l'organe d'accouplement (5) est relié au porte-coussin (10) du bâti de siège (1).

20. Siège de véhicule automobile selon l'une des revendications précédentes, **caractérisé en ce que** l'organe d'accouplement (5) est relié au mécanisme de déplacement (2) du bâti de siège (1).

21. Siège de véhicule automobile selon l'une des revendications 15 à 20, **caractérisé en ce que** l'organe d'accouplement (5) est formé par au moins un levier d'accouplement.

22. Siège de véhicule automobile selon l'une des revendications 15 à 20, **caractérisé en ce que** l'organe accouplement (5) est formé par un système à câble Bowden.

23. Siège de véhicule automobile selon l'une des revendications précédentes, **caractérisé en ce que** le mécanisme de déplacement (2) comprend un levier de déplacement (20) pour abaisser et/ou déplacer le bâti de siège (1) en direction longitudinale du siège (L), qui est d'une part articulé sur le bâti de siège (1) et d'autre part susceptible d'être relié à un groupe structurel de plancher (B) d'un véhicule automobile.

24. Siège de véhicule automobile selon l'une des revendications 1 à 22, **caractérisé en ce que** le mécanisme de déplacement (2) comprend un guidage à glissière (26, 27) pour abaisser et/ou déplacer le bâti de siège (1) en direction longitudinale du véhicule (L), via lequel le bâti de siège (1) coopère avec un groupe structurel de plancher (B, 25) d'un véhicule automobile.

25. Siège de véhicule automobile selon la revendication 23 ou 24, **caractérisé en ce que** le levier de déplacement (20) ou respectivement le guidage à glissière (26, 27) est prévu dans la région de l'extrémité avant du bâti de siège (1).

26. Siège de véhicule automobile selon l'une des revendications précédentes, **caractérisé en ce que** le bâti de siège (1) est monté avec possibilité de pivotement dans la région de son extrémité arrière.

27. Siège de véhicule automobile selon la revendication 26, **caractérisé en ce que** le bâti de siège (1) est monté en pivotement sur l'organe d'accouplement (5) dans la région de son extrémité arrière.

28. Siège de véhicule automobile selon la revendication 26, **caractérisé en ce que** le bâti de siège (1) est monté en pivotement sur un groupe structurel (B, 8) solidaire de la carrosserie, dans la région de son extrémité arrière.

29. Siège de véhicule automobile selon l'une des revendications 26 à 28, **caractérisé en ce que** l'emplacement d'articulation (52) est guidé en déplacement dans un guidage longitudinal (82).

30. Siège de véhicule automobile selon l'une des revendications précédentes, **caractérisé en ce qu'**il est prévu une butée (A), contre laquelle est pressé le bâti de siège (1) en raison des forces d'appui (F) transmises depuis le mécanisme de couplage (4, 5).

31. Siège de véhicule automobile selon l'une des revendications précédentes, **caractérisé en ce que** l'élément de blocage (40b, 40d) est réalisé d'une seule pièce avec l'élément de commande (4).

32. Siège de véhicule automobile selon la revendication 31, **caractérisé en ce que** l'élément de blocage (40b, 40d) est réalisé comme une surface de butée de l'élément de commande (4).

33. Siège de véhicule automobile selon l'une des revendications précédentes, **caractérisé en ce que** l'élément de commande (4) agit sur le mécanisme d'accouplement (4, 5) via un mécanisme à démultiplication.

34. Siège de véhicule automobile selon la revendication 33, **caractérisé en ce que** le mécanisme à démultiplication est formé par coopération de zones dentées (45, 45' ; 45, 55).

35. Siège de véhicule automobile selon la revendication 33, **caractérisé en ce que** le mécanisme à démultiplication est formé par des éléments de levier (Sa, 5b).
